(19) **Europäisches Patentamt / European Patent Office / Office européen des brevets**

(11) **EP 4 682 832 A1**

(12) **EUROPEAN PATENT APPLICATION**
published in accordance with Art. 153(4) EPC

(43) Date of publication:
**21.01.2026 Bulletin 2026/04**

(21) Application number: **23927650.4**

(22) Date of filing: **28.12.2023**

(51) International Patent Classification (IPC):
**G06T 11/80** (2006.01)

(52) Cooperative Patent Classification (CPC):
**G06T 11/80**

(86) International application number:
**PCT/JP2023/047352**

(87) International publication number:
**WO 2024/190048 (19.09.2024 Gazette 2024/38)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **12.03.2023 JP 2023038187**

(71) Applicant: **CELSYS, Inc.**
**Tokyo 160-0023 (JP)**

(72) Inventors:
• **IGUCHI, Yusuke**
  **Tokyo 160-0023 (JP)**
• **KATSUMI, Satoshi**
  **Tokyo 160-0023 (JP)**

(74) Representative: **Hautier IP - MC/EP**
**17, avenue Albert II**
**C/o The Office & Co - L'ALBU**
**98000 Monaco (MC)**

(54) **PERSPECTIVE RULER DISPLAY METHOD**

(57) [Object] To make it easier for a user who draws a picture on a virtual canvas using drawing software to draw an illustration like a photograph captured through a fisheye lens.

[Solving Means] The technique disclosed herein provides a perspective ruler display method including: with $\theta$ representing an angle $\angle OPW$ formed by a point O on the canvas, a point P placed on a straight line V passing through the point O and orthogonal to a plane of the canvas, and a point W existing in the three-dimensional space and with a distance between the point O and the point P being 1, transforming a straight line on the canvas or a figure existing in the three-dimensional space using a function $f(\theta, k)$ for transforming coordinates of the point W into coordinates of a point B on the canvas which is away from the point O by a distance $f(\theta, k)$, to obtain a curved line having a same shape as a curved line found by transformation of a straight line using the function $f(\theta, k)$ and display a perspective ruler having the curved line thus obtained.

START

S2502

DEFINE FUNCTION $f(\theta, k)$

IN RANGE OF $0 \leq \theta < \pi/2$ WITHIN RANGE OF $\theta$ USED FOR TRANSFORMATION,
$0 \leq f(\theta, k) \leq R*\tan(\theta)$
$0 \leq \partial f(\theta, k)/\partial \theta \leq R*\sec^2(\theta)$

$\partial f(\theta, k)/\partial \theta|_{\theta=0} = R$
IF RANGE OF $\theta$ INCLUDES REGION OF $\pi/2$ OR GREATER, IN RANGE OF $\pi/2 \leq \theta \leq \mu$ WITHIN THE RANGE OF $\theta$,
$f(\theta, k) > 0$
$\partial f(\theta, k)/\partial \theta \geq 0$

S2504

TRANSFORM STRAIGHT LINE ON CANVAS OR FIGURE EXISTING IN THREE-DIMENSIONAL SPACE USING FUNCTION $f(\theta, k)$ TO OBTAIN CURVED LINE HAVING SAME SHAPE AS CURVED LINE OBTAINED BY TRANSFORMATION OF STRAIGHT LINE USING FUNCTION $f(\theta, k)$, AND DISPLAY PERSPECTIVE RULER HAVING OBTAINED CURVED LINE

END

FIG.25

Processed by Luminess, 75001 PARIS (FR)

**Description**

[Technical Field]

The present invention relates to a perspective ruler display method.

[Background Art]

Conventionally, a perspective ruler based on the laws of perspective is used to draw a three-dimensional object such as an illustration using drawing software.

A perspective ruler is used to draw an illustration in correct perspective based on the laws of perspective. An example usage of a perspective ruler is as follows.

When a user draws an object, the user places a perspective ruler in alignment with an object that the user wants to draw. For instance, if the object is box-shaped, the user places a perspective ruler along the shape of the box. Along the perspective ruler, the user can draw a line in perspective. By using a perspective ruler, a user can draw a line along a guide line of the perspective ruler and can therefore draw a correct straight line conforming to the laws of perspective by hand. By repeating the same process, a user can draw an illustration conforming to the laws of perspective on a two-dimensional canvas.

While a perspective using a linear projection method called perspective projection is used for an illustration with a regular composition, a special perspective called a fisheye perspective may be used to offer a more dynamic effect.

With a fisheye perspective, unlike a perspective using typical perspective projection, it is difficult to draw correct lines by hand because curved lines need to be drawn. Thus, a ruler tool is required to assist on drawing such a complicated object representing a fisheye lens.

A conventionally known, typical fisheye perspective ruler uses curvilinear grid lines.

There is drawing software that provides curvilinear perspective rulers usable in drawing an illustration with distortion that looks like a photograph captured through a fisheye lens. By using curvilinear perspective rulers, a user can draw an object representing the laws of perspective, like a video of a photograph taken using a fisheye lens. Using such software makes it relatively easy to draw a perspective as if it is captured through a fisheye lens.

There is a non-patent literature disclosing how to draw a fisheye perspective (see, for example, NPL 1). This literature discloses typical methodology for drawing an illustration with distortion that looks like a photograph captured by a camera using a fisheye lens.

However, a conventional fisheye perspective ruler has the following characteristics.

Although it is possible to draw a line parallel to a coordinate axis of a virtual camera into a curved line that looks like it has been captured through a fisheye lens, perspective rulers capable of drawing lines having various directions are not provided.

Also, there are various kinds of fisheye lenses, offering perspectives with different strengths of distortion. However, a conventional fisheye perspective ruler does not provide a user with a function which can be used for drawing with various strengths of distortion.

Fisheye perspective rulers are displayed in grids also at unnecessary locations not contributing to drawing work and therefore may get in the way of the user's drawing work.

[Citation List]

[Non Patent Literature]

[NPL 1] https://oekaki-zukan.com/articles/11818

[Summary of Invention]

[Technical Problem]

A technique disclosed herein aims to allow a user who is drawing a picture on a virtual canvas using drawing software to more easily draw an illustration that looks like a photograph captured through a fisheye lens.

[Solution to Problem]

A technique disclosed herein provides a perspective ruler display method for a computer to display a perspective ruler which is placed on a planar canvas existing in a virtual three-dimensional space so as to allow a line to be drawn on the canvas along the perspective ruler in response to an instruction for drawing with a fisheye lens effect from a user, the method comprising:

with θ representing an angle LOPW formed by a point O on the canvas, a point P placed on a straight line V passing through the point O and orthogonal to a plane of the canvas, and a point W existing in the three-dimensional space and with a distance between the point O and the point P being 1, defining a function f(θ, k) for transforming coordinates of the point W into coordinates of a point B on the canvas which is away from the point O by a distance f(θ, k), the function f(θ, k) satisfying, in a range of $0 \leq θ < π/2$ within a range of θ used for the transformation,

$$0 \leq f(\theta, k) \leq R * \tan(\theta)$$

and

$$0 \leq \partial f(\theta, k)/\partial\theta \leq R * \sec^2(\theta),$$

the function f(θ, k) satisfying

$$\partial f(\theta, k)/\partial\theta|_{\theta=0} = R,$$

and
in a case where the range of θ includes a region with π/2 or greater, the function f(θ, k) satisfying, in a range of $π/2 \leq θ \leq π$ within the range of θ,

$$f(\theta, k) > 0$$

and

$$\partial f(\theta, k)/\partial\theta \geq 0;$$

and
transforming a straight line on the canvas or a figure existing in the three-dimensional space using the function f(θ, k) to obtain a curved line having a same shape as a curved line found by transformation of a straight line using the function f(θ, k) and display a perspective ruler having the curved line thus obtained, wherein
k is a parameter indicative of distortion strength of the fisheye lens effect applied to the perspective ruler, and
R is a parameter indicative of overall scaling of the perspective ruler with the point O being a center.

Also, in the technique disclosed herein, the point B may exist on a straight line obtained by vertical projection of a straight line connecting the point O and the point W onto the plane of the canvas.

Also, in the technique disclosed herein, the point W may be a point existing on the canvas, and the displaying the perspective ruler may display a perspective ruler with a curved line obtained by transformation of a straight line on the canvas using the function f(θ, k).

Also, in the technique disclosed herein, the point B may exist on a straight line connecting the point O and the point W.

Also, in the technique disclosed herein, a curved plane G axisymmetric with respect to the straight line V may be formed, and

with Q representing a point where a straight line connecting the point P and the point W intersects with the curved plane G and D representing a point where a straight line connecting the point Q and a point S intersects with the canvas, the point S existing on the straight line V and located at an opposite side of the point P from the point O,
a value of the k may be proportional to a distance between the point P and the point S, and
a value of the function f(θ, k) may be proportional to a distance between the point O and the point D.

Also, in the technique disclosed herein, a curved plane G axisymmetric with respect to the straight line V may be formed, and

with Q representing a point where a straight line connecting the point P and the point W intersects with the curved plane G, C representing a point placed on the straight line connecting the point P and the point W, α representing a value of an angle formed by the plane of the canvas and a vector OQ, and $\beta$ representing a value of an angle formed by the plane of the canvas and a vector OC,
a value of the k may be proportional to a value of $\beta/\alpha$, and
a value of the function $f(\theta, k)$ may be proportional to a distance between the point O and the point C.

Also, in the technique disclosed herein, the function $f(\theta, k)$ may coincide with or approximate $R * \tan(\theta)$ when the distortion strength k is a predetermined value.
Also, in the technique disclosed herein, when the distortion strength k is a predetermined value, the function $f(\theta, k)$ may coincide with or approximate at least one of

$2 * R * \tan(\theta/2)$ which is stereographic projection,
$R * \theta$ which is equidistant projection,
$2 * R * \sin(\theta/2)$ which is equisolid projection, and
$R * \sin(\theta)$ which is orthographic projection.

Also, in the technique disclosed herein, the defining the function $f(\theta, k)$ may include, in finding the coordinates of the point B, finding the coordinates of the point B on the canvas by applying the function $f(\theta, k)$ which is different for an X-coordinate of the point B and for a Y-coordinate of the point B in terms of an X-axis and a Y-axis which are coordinate axes orthogonal to each other with the point O as an origin on the plane of the canvas.
Also, in the technique disclosed herein, the displaying a perspective ruler may include setting the distortion strength k and the scale factor R while maintaining size of a function $f(\pi/2, k)$ at a certain value.
Also, in the technique disclosed herein, the function $f(\theta, k)$ may be defined by a formula below:

$$f(\theta, \; k) \; = \; R \; * \; (k \; + \; 1) \; * \; \sin(\theta)/(k \; + \; \cos(\theta)),$$

where $0 \leq k \leq \infty$.
Also, in the technique disclosed herein, the function $f(\theta, k)$ may be defined by a formula below:

$$f(\theta, \; k) \; = \; R \; * \; \sin(\theta)/\cos(\theta \; - \; \theta \; * \; k/2),$$

where $0 \leq k \leq 2$.
Also, the technique disclosed herein may provide a perspective ruler display method for a computer to display a perspective ruler which is placed on a planar canvas so as to allow a line to be drawn on the canvas along the perspective ruler in response to an instruction for drawing with a fisheye lens effect from a user, the method comprising:

with r being a distance between a point O on the canvas and a point W existing on the canvas, defining a function $g(r, k)$ for transforming coordinates of the point W into coordinates of a point B on the canvas which is away from the point O by a distance $g(r, k)$, the function $g(r, k)$ satisfying

$$0 \; \leq \; g(r, \; k) \; \leq \; R \; * \; r,$$

$$0 \; \leq \; \partial g(r, \; k)/\partial r \; \leq \; R,$$

and

$$\partial g(r, \; k)/\partial r|_{\theta=0} \; = \; R;$$

and
transforming a straight line on the canvas using the function $g(r, k)$ to obtain a curved line and display a perspective ruler having the curved line thus obtained, wherein
k is a parameter indicative of distortion strength of the fisheye lens effect applied to the perspective ruler, and
R is a parameter indicative of overall scaling of the perspective ruler with the point O being a center.

Also, in the technique disclosed herein, the function $g(r, k)$ may be defined by a formula below:

$$g(r, k) = R * (k + 1) * \sin(\tan^{-1}(r))/(k + \cos(\tan^{-1}(r))),$$

where $0 \leq k \leq \infty$.

Also, in the technique disclosed herein, the function g(r, k) may be defined by a formula below:

$$g(r, k) = R * \sin(\tan^{-1}(r))/\cos(\tan^{-1}(r) - \tan^{-1}(r) * k/2),$$

where $0 \leq k \leq 2$.

Also, the technique disclosed herein provides a perspective ruler display method for a computer to display a perspective ruler which is placed on a planar canvas existing in a virtual three-dimensional space so as to allow a line to be drawn on the canvas along the perspective ruler in response to an instruction for drawing with a fisheye lens effect from a user, the method comprising:

based on a user instruction, identifying a rule for transforming a straight line on the canvas or a virtual straight line in the three-dimensional space into a curved line on the canvas conforming to the fisheye lens effect;
generating the perspective ruler defined by a curved line which is based on the rule and passes through a predetermined position on the canvas specified by the user;
identifying a position of a vanishing point on a plane including the canvas in a manner recognizable to the user, the vanishing point being a point to which curved lines of a plurality of the perspective rulers converge; and
displaying the perspective ruler on the canvas.

Also, in the technique disclosed herein, if the user instruction is to change distortion strength of the fisheye lens effect, the identifying a rule may include changing the rule in response to a change in the distortion strength, and the generating the perspective ruler may include changing the perspective ruler generated before the rule is changed, into the perspective ruler defined by a curved line which is based on the changed rule and passes through the predetermined position specified by the user before the rule is changed.

Also, in the technique disclosed herein, the identifying a rule may identify the rule based on at least one of the distortion strength of the fisheye lens effect specified by the user, a scale factor, and a position of a point of intersection between the canvas and a center axis of a virtual lens with the fisheye lens effect.

Also, in the technique disclosed herein, the identifying a rule may include

identifying curved lines of two perspective rulers by drawing two curved lines on the canvas based on a user instruction,
setting a point of intersection between the two curved lines as a vanishing point, and
identifying distortion strength of the fisheye lens effect based at least on a degree of curvature of at least one of the two curved lines.

Also, in the technique disclosed herein, if the user instruction is to change a slope of a predetermined perspective ruler, the generating the perspective ruler may include changing the position of the vanishing point of the predetermined perspective ruler by applying the rule in response to a change in the slope.

Also, in the technique disclosed herein, if the user instruction is to change the predetermined position, the generating the perspective ruler may include changing the curved line of a predetermined perspective ruler passing through the changed predetermined position by applying the rule in response to a change in the predetermined position, without changing the position of the vanishing point of the predetermined perspective ruler.

Also, in the technique disclosed herein, if fixing the position of the predetermined vanishing point is instructed by the user and a predetermined position on a perspective ruler converging to the predetermined vanishing point is not to be changed, the generating the perspective ruler may include making the perspective ruler unchangeable.

Also, in the technique disclosed herein, if distortion strength is changed by the user, the generating the perspective ruler may not move the predetermined position.

Also, in the technique disclosed herein, if the position of the vanishing point is changed as instructed by the user, the generating the perspective ruler may include changing the curved line of the perspective ruler.

Also, in the technique disclosed herein, if display of the perspective ruler already displayed is changed, the displaying the perspective ruler may include changing an image drawn along a plurality of the perspective rulers as instructed by the user, in conformity with a change in each of the plurality of perspective rulers.

Also, in the technique disclosed herein, if display of the perspective ruler already displayed is changed, the displaying the perspective ruler may include changing an image existing on the canvas in conformity with a change in each of a plurality of the perspective rulers.

Also, the technique disclosed herein may be a program for causing a computer to execute the perspective ruler display method.

[Advantageous Effects of Invention]

The technique disclosed herein can provide an environment which makes it easier for a user who draws a picture on a virtual canvas using drawing software to draw an illustration like a photograph captured through a fisheye lens.

[Brief Description of Drawings]

[Fig. 1] Fig. 1 is a diagram illustrating an overview of a technique disclosed herein. Fig. 1A is a diagram showing an illustration drawn by a user using the technique disclosed herein. Fig. 1B shows a reference image used by the user as a reference in drawing the illustration.

[Fig. 2] Fig. 2 is a diagram illustrating an overview of how a user draws an illustration using the technique disclosed herein.

[Fig. 3] Fig. 3 is a diagram showing a situation where fisheye perspective rulers are set according to a reference image.

[Fig. 4] Fig. 4 is a diagram showing a state where a curved line 410 is drawn along a fisheye perspective ruler.

[Fig. 5] Fig. 5 is a diagram showing the display in a state where the reference image is turned off.

[Fig. 6] Fig. 6 is a diagram showing an example of a function f(θ, k) used in generating a fisheye perspective ruler.

[Fig. 7] Fig. 7 is a diagram showing an example case where θ exceeds 90° with the same method and function f(θ, k) as Fig. 6.

[Fig. 8] Fig. 8 is a diagram showing another example of the function f(θ, k) used in generating a fisheye perspective ruler.

[Fig. 9] Fig. 9 is a diagram showing an example case where θ exceeds 90° with the same method and function f(θ, k) as Fig. 8.

[Fig. 10] Fig. 10 is a diagram showing an example where a curved plane G is a non-spherical curved plane.

[Fig. 11] Fig. 11 is a diagram showing an example of how distortion strength is set and a vanishing point is determined based on a user instruction. Figs. 11A to 11D show an example user interface which a user can operate intuitively to determine distortion strength and a vanishing point and determine two fisheye perspective rulers.

[Fig. 12] Fig. 12 is a diagram showing an example of how fisheye perspective rulers are displayed in a case where a user changes distortion strength. Fig. 12A shows the display of fisheye perspective rulers before distortion strength is changed. Fig. 12B shows the display of fisheye perspective rulers after distortion strength is changed.

[Fig. 13] Fig. 13 is a diagram illustrating how a vanishing point moves as a result of a change in the slope of a fisheye perspective ruler. Fig. 13A shows a state before the slope of the fisheye perspective ruler is changed. Fig. 13B shows a state after the slope of the fisheye perspective ruler is changed.

[Fig. 14] Fig. 14 is a diagram showing an example of adding a fisheye perspective ruler. Figs. 14A to 14C show an example of adding a single fisheye perspective ruler.

[Fig. 15] Fig. 15 is a diagram showing a state when a predetermined position on a fisheye perspective ruler is moved as instructed by a user. Fig. 15A shows a state before the predetermined position is moved. Fig. 15B shows a state after the predetermined position is moved.

[Fig. 16] Fig. 16 shows an example of the display of handles when a user gives an instruction to fix the position of a vanishing point. Fig. 16A shows a state before the user gives the instruction to fix the position of the vanishing point. Fig. 16B shows a state after the user gives the instruction to fix the position of the vanishing point.

[Fig. 17] Fig. 17 is a diagram showing how a state transitions when a point O (a lens center point O) where a straight line V at the center axis of a virtual lens intersects with a canvas is moved. Fig. 17A shows a state before the lens center point O is moved. Fig. 17B shows a state after the lens center point O is moved.

[Fig. 18] Fig. 18 is a diagram showing how a state transitions when a vanishing point is moved. Fig. 18A shows a state before the vanishing point is moved. Fig. 18B shows a state after the vanishing point is moved.

[Fig. 19] Fig. 19 is a diagram showing how a state transitions when distortion strength is changed. Fig. 19A is a diagram showing a state before the distortion strength change. Fig. 19B is a diagram showing a state after the distortion strength change.

[Fig. 20] Fig. 20 is a diagram showing how a state transitions when a scale factor R is changed. Fig. 20A is a diagram showing a state before the scale factor R is changed. Fig. 20B is a diagram showing a state after the scale factor R is changed.

[Fig. 21] Fig. 21 is a diagram showing a change in the display of fisheye perspective rulers. Fig. 21A is a diagram showing a state before distortion strength is changed. Fig. 21B is a diagram showing a state after distortion strength is changed.

[Fig. 22] Fig. 22 is a diagram showing how curved lines already drawn along fisheye perspective rulers change as a result of a change in the display of the fisheye perspective rulers. Fig. 22A is a diagram showing a state before distortion strength is changed. Fig. 22B is a diagram showing a state after distortion strength is changed.

[Fig. 23] Fig. 23 is a diagram showing how an image on a canvas changes as a result of a change in the display of fisheye perspective rulers. Fig. 23A is a diagram showing a state before distortion strength is changed. Fig. 23B is a diagram showing a state after distortion strength is changed.

[Fig. 24] Fig. 24 is a diagram showing how an image on a canvas changes as a result of a change in the display of fisheye perspective rulers. Fig. 24A is a diagram showing a state before the change. Fig. 24B is a diagram showing a state after the change.

[Fig. 25] Fig. 25 is a flowchart of generating a curved line of a fisheye perspective ruler used for drawing with a fisheye lens effect.

[Fig. 26] Fig. 26 is a flowchart showing processing using the function described in Figs. 6 and 7.

[Fig. 27] Fig. 27 is a flowchart showing processing using the function described in Figs. 8 and 9.

[Fig. 28] Fig. 28 is a flowchart of displaying a fisheye perspective ruler on a canvas.

[Fig. 29] Figs. 29A and 29B are flowcharts showing example subroutines of Step S2802 and Step S2804.

[Fig. 30] Fig. 30 shows a flow related to rule identification.

[Fig. 31] Fig. 31 shows another flow related to rule identification.

[Fig. 32] Fig. 32 is a flowchart showing an example process flow of generating a fisheye perspective ruler.

[Fig. 33] Fig. 33 is a flowchart showing another example process flow of generating a fisheye perspective ruler.

[Fig. 34] Fig. 34 is a flowchart showing an example of displaying a fisheye perspective ruler.

[Fig. 35] Fig. 35 is a flowchart showing another example of displaying a fisheye perspective ruler.

[Fig. 36] Fig. 36 is a hardware configuration diagram according to an embodiment.

[Fig. 37] Fig. 37 is a diagram showing how to find the position of a point B from the position of a point W existing on a canvas, not using $\theta$.

[Fig. 38] Fig. 38 is a diagram showing a user interface for easily setting a plurality of fisheye perspective rulers orthogonal to each other.

[Description of Embodiments]

A technique disclosed herein is described below with reference to the drawings.

Along with various functions, a perspective ruler is provided for a user to draw an object on a virtual canvas on a plane using an input interface (such as, for example, a pencil, a mouse, a touch panel, a tablet, or a pointing device). It is to be noted that descriptions may be omitted herein about typical, publicly known functions among conventional functions related to a perspective ruler.

Also, a virtual three-dimensional space is mentioned herein. However, this virtual three-dimensional space is used to provide an easy-to-understand description of the present technique (such as a perspective ruler generation method), and it is to be noted that this virtual three-dimensional space does not necessarily have to exist when a user draws using the present technique (such as a perspective ruler).

Also, an example is described herein where a line which would be drawn as a straight line with regular perspective projection is drawn as a curve line according to a fisheye perspective effect. However, it goes without saying that the technique disclosed herein is not limited to drawing a curved line and may be used for other drawing techniques related to a dot, a circle, a rectangle, or a color filling range.

<Embodiment 1>

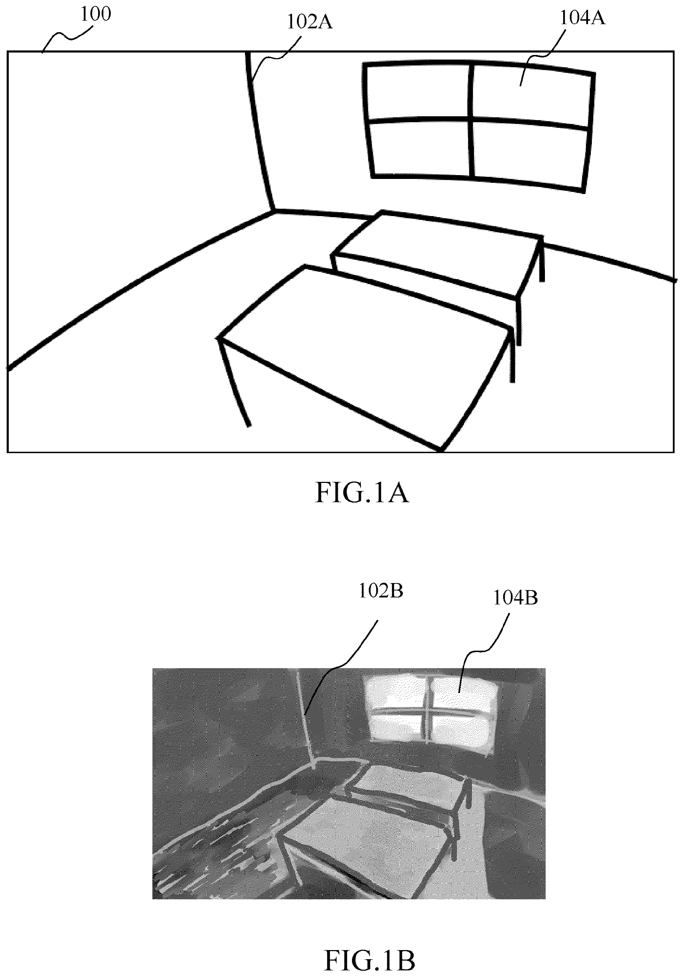

Fig. 1 is a diagram illustrating an overview of the technique disclosed herein. Fig. 1A is a diagram showing an illustration drawn by a user using the technique disclosed herein. Fig. 1B shows a reference image used as a reference by the user in drawing the illustration.

Fig. 1A is a diagram where an illustration 102A is drawn on a canvas 100. The illustration 102A is an image where an object which is actually linear has distorted, curved lines, like a photograph captured through a fisheye lens. For instance, a window 104A should actually have a window frame formed by straight lines in regular perspective projection. However, the window 104A has a distorted curvilinear window frame like a photograph captured through a fisheye lens. Such an illustration is more dynamic than one drawn with regular perspective projection.

A window 104B in a reference image 102B shown in Fig. 1B is similarly a curvilinear window, and the reference image 102B itself is an image intended to offer a fisheye lens effect.

The technique disclosed herein provides a technique which allows a user to easily draw the illustration 102A that mimics a fisheye lens effect. Note that it is desirable that when the user draws the illustration 102A, the reference image 102B can be displayed over the canvas as a draft. It is to be noted that the reference image 102B is not essential when a user draws an illustration.

Alternatively, the reference image 102B may exist only in the mind of the user as an image that the user intends to draw. Typically, a user has an image that they are trying to draw (an intended illustration) in their own mind. To embody such a virtual image, the user places fisheye perspective rulers in alignment with the virtual image and draws curved lines along the fisheye perspective rulers thus placed.

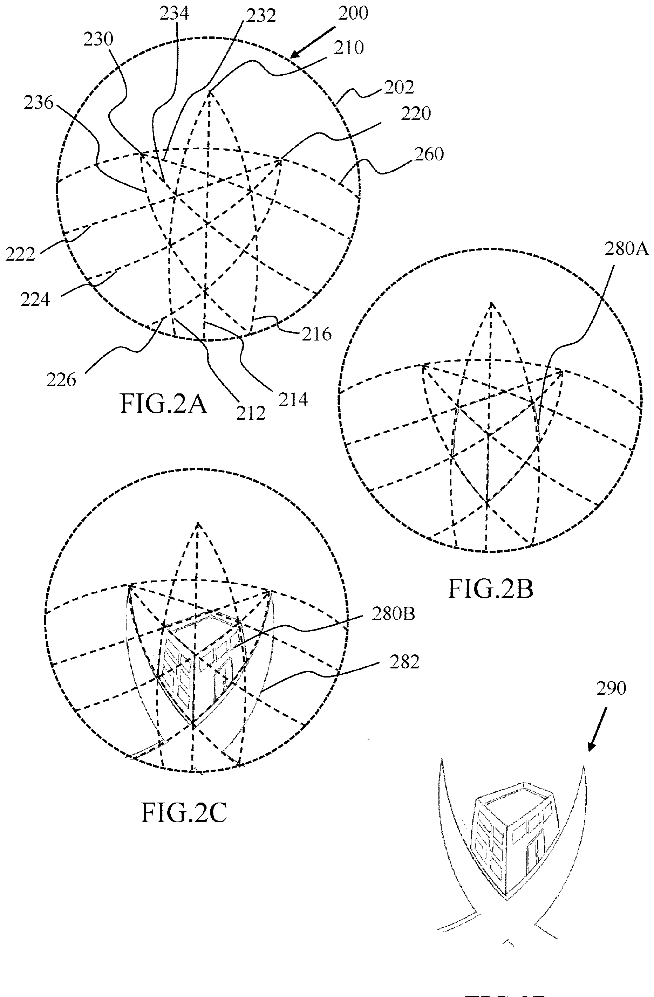

Fig. 2 is a diagram illustrating an overview of how a user draws an illustration using the technique disclosed herein. Fig. 2A is a diagram where fisheye perspective rulers and the like are displayed over a canvas. Fig. 2B is a diagram where a computer draws lines of the contour of a building based on user instructions using the technique disclosed herein. Fig. 2C is a diagram where the building and its surrounding scenery are drawn. Fig. 2D is a diagram showing a completed illustration.

Fig. 2A shows a drawing assistant tool 200 including the fisheye perspective ruler displayed over the canvas. The drawing assistant tool 200 desirably exists on a different layer from the drawing layer where an illustration is to be drawn.

In Fig. 2A, an eye level 260 is a line also called the horizon line and is a line that can be used in aligning a vanishing point of the perspective ruler with the horizon line. For example, it is known that in a projection method such as perspective projection, a plane parallel to the ground converges to the horizon at infinity. For instance, it is known that, like roadside walls of a road continuing at infinity, a group of a plurality of straight lines parallel to each other in a three-dimensional space and parallel to the ground converges to a single vanishing point existing on the eye level 260 at infinity. In this way, the eye level 260 is used as a guide for setting a vanishing point of a fisheye perspective ruler. An interface may be provided so that, when a vanishing point is brought close to the eye level, the vanishing point snaps to the line of the eye level.

In Fig. 2A, there are vanishing points 210, 220, and 230. The vanishing point 220 and the vanishing point 230 exist on the line of the eye level 260. Then, fisheye perspective rulers 222, 224, and 226 converge to the vanishing point 220 existing on the line of the eye level 260, and similarly, fisheye perspective rulers 232, 234, and 236 converge to the vanishing point 230 existing on the line of the eye level 260. Fisheye perspective rulers 212, 214, and 216 converge to the vanishing point 210 not existing on the eye level 260. Use of fisheye perspective rulers whose vanishing points exist on the line of the eye level 260 facilitates drawing of a curved line distorted from a straight line parallel to the ground based on a fisheye lens effect. Note that a fisheye perspective ruler whose vanishing point does not exist on the line of the eye level 260 is used in drawing a curved line distorted from a straight line not parallel to the ground based on a fisheye lens effect.

In Fig. 2A, a 180-degree circle 202 is drawn. A 180-degree circle corresponds to a 90-degree direction from the front of a camera in a virtual three-dimensional space. Specifically, the inside of the 180-degree circle corresponds to a region forward of the camera in the virtual three-dimensional space, and the outside of the 180-degree circle corresponds to a region rearward of the camera in the virtual three-dimensional space.

A lens circle is a circle formed by an image edge of a captured image that a fisheye lens projects onto an image capture plane. The lens circle of a fisheye lens having a 180-degree angle of view is the same as the 180-degree circle.

The fisheye perspective ruler having one vanishing point on the 180-degree circle 202 has another vanishing point at the other point where a straight line passing through the one vanishing point and the lens center point O intersects with the 180-degree circle (not shown).

A restriction may be made so that a vanishing point cannot be moved by the user to the outside of the 180-degree circle beyond the 180-degree circle.

Also, the posture of the camera in the virtual three-dimensional space does not necessarily have to be parallel to the ground. Thus, it is desirable that the eye level 260 is freely settable according to the user's purpose of drawing.

Note that the lens circle may be displayed on the canvas. In a case of a lens circle of a fisheye lens having an angle of view of more than 180 degrees, a pair of two vanishing points may exist within the lens circle.

Fig. 2B shows how a contour 280A of the building is drawn along each of the fisheye perspective rulers as instructed by the user.

Fig. 2C shows how a completed illustration of a building 280B and roads around the building are drawn. For example, in a case where a user draws curved lines, a line may be drawn at the position of each fisheye perspective ruler. Also, if a user wants to draw a line away from a fisheye perspective ruler, an invisible fisheye perspective ruler passing through a position on the canvas pointed to by the pointing device may be selected, and a curved line may be drawn along the selected fisheye perspective ruler based on a user instruction. This way, fewer fisheye perspective rulers may be displayed so that the fisheye perspective rulers will not get in the way of the user's drawing, and at the same time, an illustration with a proper fisheye lens effect can be computer-drawn as instructed by the user.

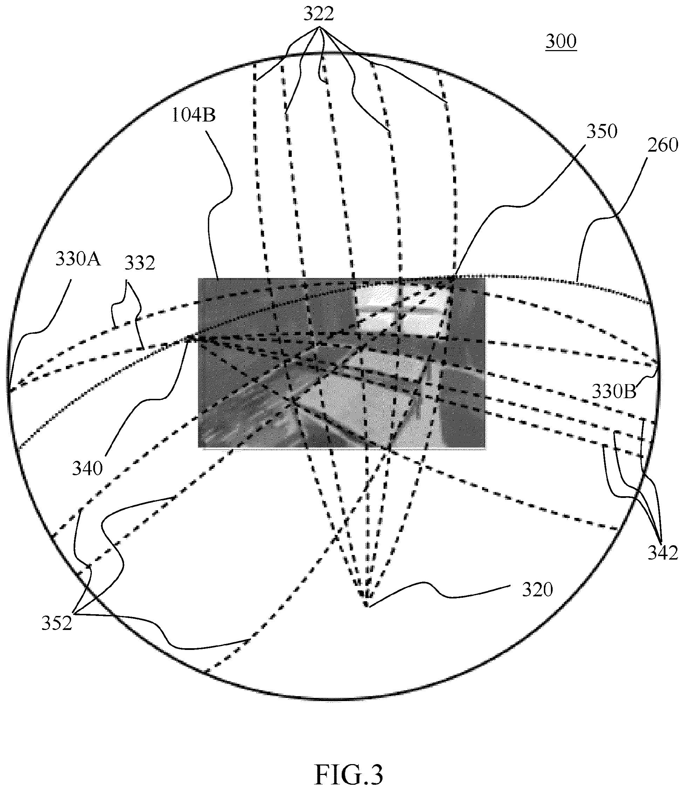

Fig. 3 is a diagram showing a situation where fisheye perspective rulers are set according to a reference image.

A plurality of fisheye perspective rulers 342 converging to a vanishing point 340 and a plurality of fisheye perspective rulers 352 converging to a vanishing point 350 are fisheye perspective rulers extending along edges of a desk, borders between the walls and the floor, and horizontal frames of the window frame, which should be straight lines parallel to the ground.

On a canvas 300, a plurality of fisheye perspective rulers 322 converging to a vanishing point 320 are fisheye perspective rulers extending along desk legs, the border between the walls, and vertical frames of the window frame, which should be straight lines perpendicular to the ground.

In this way, by using a reference image, a user can easily set a plurality of fisheye perspective rulers.

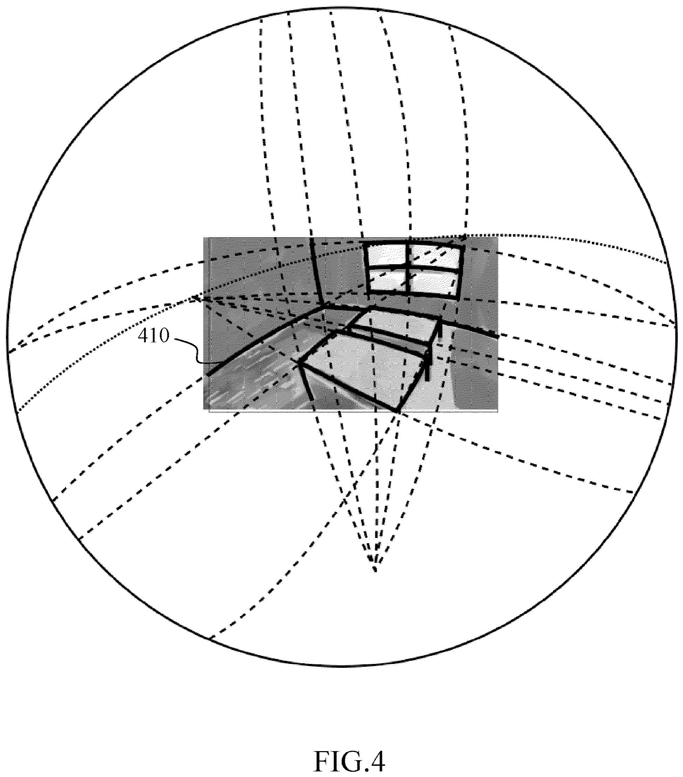

Fig. 4 is a diagram showing a state where a curved line 410 is drawn along a fisheye perspective ruler.

By the user's moving the pointing device on the canvas along the fisheye perspective ruler, the curved line 410 can be computer-drawn.

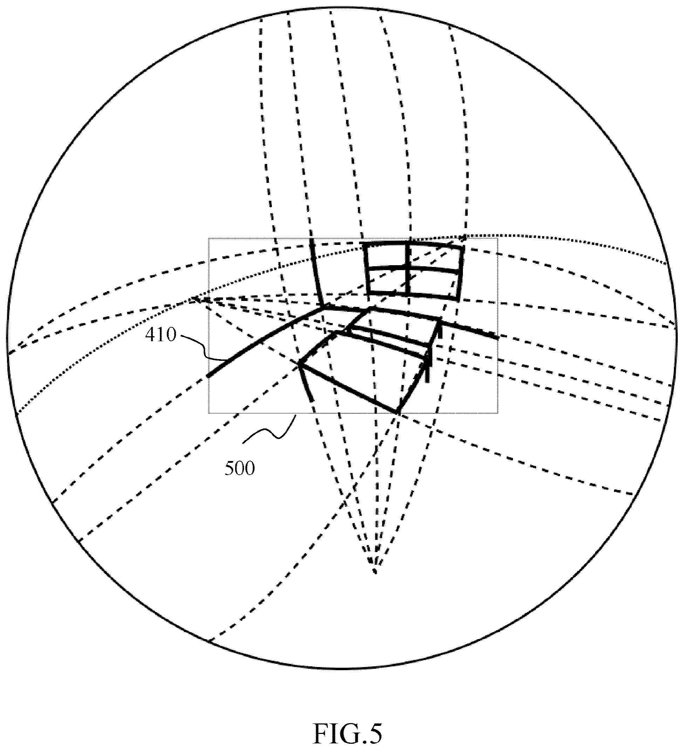

Fig. 5 is a diagram showing the display with the display of the reference image turned off. The drawn curved line 410 is displayed along with the fisheye perspective ruler. Note that a quadrilateral 500 is a diagram depicted for convenience to indicate the position of the reference image.

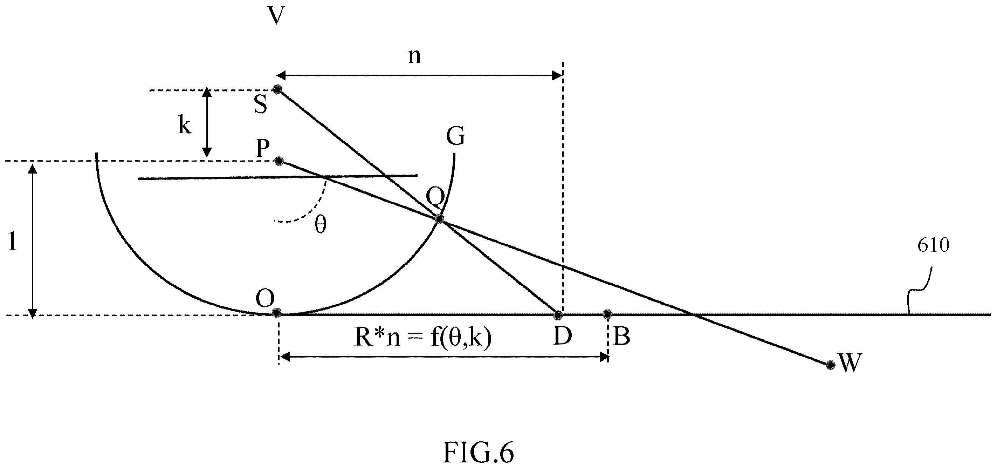

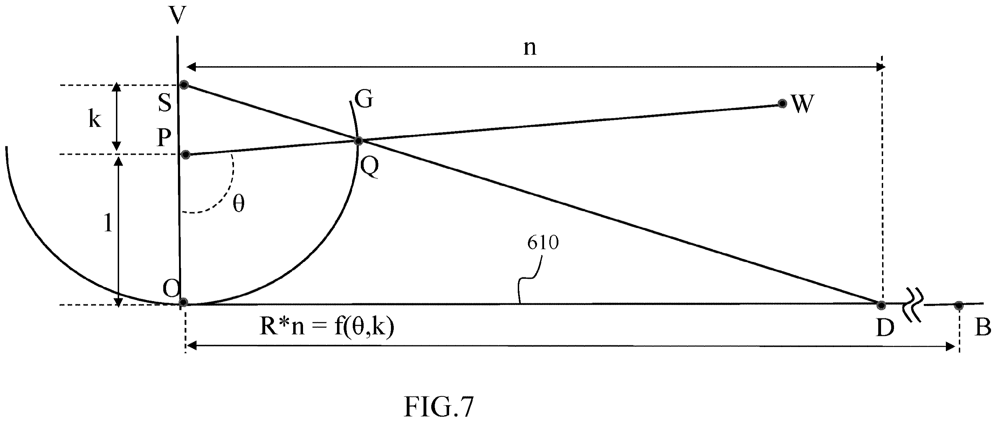

Figs. 6 and 7 are diagrams showing an example of a function f($\theta$, k) used in generating a fisheye perspective ruler. Fig. 6 is a diagram for a case where $0 \leq \theta < \pi/2$, and Fig. 7 is a diagram for a case where $\pi/2 \leq \theta \leq \pi$. $\theta$ is the value of an angle <OPW formed by a point O on a canvas 610, a point P placed on a straight line V passing through the point O and orthogonal to the plane of the canvas, and a point W existing in the three-dimensional space, and the distance between the point O and the point P is 1. In addition, a point S is placed on the straight line V at an opposite side of the point P from the point O, spaced away from the point P by a distance of k.

Also, a curved plane G axisymmetric about the straight line V is placed. An example of the curved plane G is a spherical plane with a radius of 1 from the point P as the center. Note that the curved plane G is not limited to such a spherical plane.

A point where a straight line connecting the point P and the point W intersects with the curved plane G is Q. A point where a straight line connecting the point S and the point Q intersects with the canvas 610 is a point D. The distance from the point O to the point D is n.

In a case where the curved plane G is a spherical plane with a radius of 1 from the point P as the center, the distance n is expressed as follows:

```
n = (k + 1) * sin(θ)/(k + cos(θ)), where 0 ≤ k ≤ ∞.  (Formula
1)
```

When R represents a scale factor, the function f($\theta$, k) is expressed as follows:

```
f(θ, k) = R * (k + 1) * sin(θ) / (k + cos(θ))  (Formula 2)
```

Note that k is a parameter indicative of the strength of distortion of a fisheye lens effect, and the scale factor R is a parameter for scaling the entire transformation formula. As shown below, depending on the value of k, f($\theta$, k) coincides with or approximates various projection methods.

k = 0: f($\theta$, k) coincides with perspective projection (f($\theta$, k) = R * tan($\theta$)). (Formula 3-1)

k = 1: f($\theta$, k) coincides with stereographic projection (f($\theta$, k) = 2 * R * tan($\theta$/2)). (Formula 3-2)

k = 1.8: f($\theta$, k) approximates equidistant projection (f($\theta$, k) $\approx$ R * $\theta$). (Formula 3-3)

k = 2.5: f($\theta$, k) approximates equisolid projection (f($\theta$, k) $\approx$ 2 * R * sin($\theta$/2)). (Formula 3-4)

k = $\infty$: f($\theta$, k) coincides with orthographic projection (f($\theta$, k) = R * sin($\theta$)). (Formula 3-5)

By thus setting the distortion parameter k and the scale factor R appropriately, fisheye perspective rulers corresponding to various fisheye lens effects can be defined.

Note that the radius of a 180-degree circle is the value of function f($\theta$, k) when $\theta$ = $\pi/2$, i.e., f($\pi/2$, k).

The function f($\theta$, k) has the following properties.

In the range of $0 \leq \theta < \pi/2$ within the range of $\theta$ used for transformation,

```
0 ≤ f(θ, k) ≤ R * tan(θ) and         (Formula 4)

0 ≤ ∂f(θ, k)/∂θ ≤ R * sec²(θ)        (Formula 5-1)
```

are satisfied.

$$\partial f(\theta, k)/\partial \theta|_{\theta=0} = R \qquad \text{(Formula 5-2)}$$

is satisfied. In a case where the range of θ includes a region of π/2 or greater, in the range of $\pi/2 \leq \theta \leq \pi$ within the range of θ,

$$f(\theta, k) > 0 \text{ and} \qquad \text{(Formula 5-3)}$$

$$\partial f(\theta, k)/\partial \theta \geqq 0 \qquad \text{(Formula 5-4)}$$

are satisfied.

Formula 4 indicates that the coordinates of a point resultant from transformation using the function f(θ, k) moves toward the point O compared to transformation by perspective projection (and its uniform scaling).

Formula 5-1 indicates that a portion corresponding to a result of transformation using the function f(θ, k) shrinks radially with the point O being the center, compared to transformation by perspective projection (and its uniform scaling).

Formula 5-2 indicates that near the point O, scaling is almost the same as with transformation by perspective projection (and its uniform scaling).

The above conditional Formula 4, Formula 5-1, and Formula 5-2 indicate that scaling is almost the same as transformation by perspective projection near the point O, a transformation result shrinks toward the point O, and the farther away from the point O, the stronger the level of radial shrinkage toward the point O being the center.

Further, the function f(θ, k) may be defined so that $\partial f(\theta, k)/\partial \theta/ (R * sec^2(\theta))$ may monotonically decreases with respect to θ.In transformation using the function f(θ, k), in comparison to transformation by perspective projection (and its uniform scaling), the farther away from the point O, the stronger the degree of contraction of a portion corresponding to a transformation result (i.e., it shrinks and becomes smaller).

As shown in Fig. 7, a fisheye perspective ruler can be defined when θ exceeds π/2 (90°) as well. However, depending on the value of k, the value of f(θ, k) may become infinite or fail to satisfy Formula 5-4. For this reason, it is desirable that the range of θ be limited to a range where the value of f(θ, k) will not be infinite and will satisfy Formula 5-4.

Note that pincushion distortion can be expressed when the value of k is -1 < k < 0. The point S is located on the same side of the point P as the point O.

A straight line on the canvas or a figure existing in a three-dimensional space is transformed by the function f(θ, k) to obtain a curved line having the same shape as a curved line obtained by transformation of a straight line using the function f(θ, k), and a fisheye perspective ruler having the obtained curved line is displayed.

A figure F satisfying the following condition exists with respect to a straight line L existing in a three-dimensional space.

Condition: A curved line obtained by transformation of the figure F existing in a three-dimensional space using the function f(θ, k) is the same as a curved line obtained by transformation of the straight line L using the function f(θ, k).

By utilizing this, instead of transforming the straight line L using the function f(θ, k), the figure F may be transformed using the function f(θ, k) to obtain the curved line of a fisheye perspective ruler.

The following gives an example of such a figure F. Note that a plane including the point P and the straight line L is a plane E.

- A line of intersection between the plane E and the curved plane G
- A curved line on the plane E
- A planar figure on the plane E

The above-described application using the figure F can be applied to other instances of the function f(θ, k) described below.

Also, a fisheye perspective ruler may be defined by, when finding the coordinates of a point B, finding the coordinates of the point B on a canvas, the point B being found by setting, on the plane of a canvas, an orthogonal coordinate system (of X and Y coordinates) having its origin at the point O (not shown) and applying the function f(θ, k) having different parameters between the X-coordinate of the point B and the Y-coordinate of the point B.

By the definition of such a fisheye perspective ruler, a fisheye perspective ruler having different fisheye lens effects between the X-axis direction and the Y-axis direction can be obtained.

The above-described application using different parameters for the X-coordinate and the Y-coordinate can be applied to other instances of the function f(θ, k) described below.

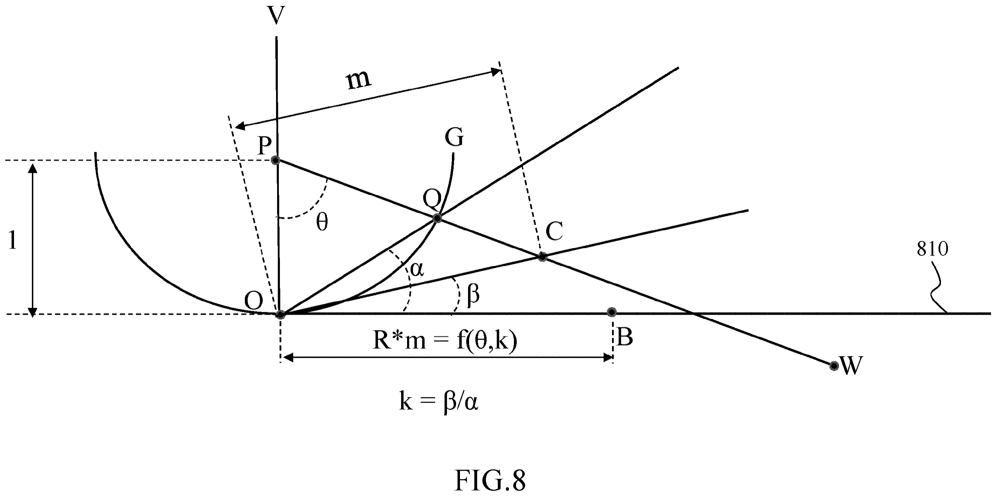

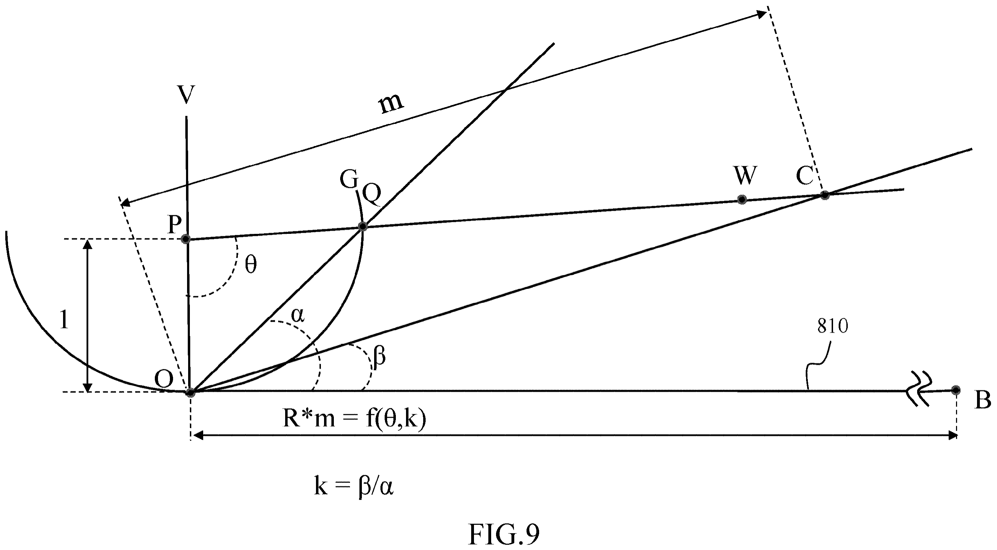

Figs. 8 and 9 are diagrams showing another example of the function f(θ, k) used in generating a fisheye perspective ruler. Fig. 8 is diagram for a case where $0 \leq \theta < \pi/2$, and Fig. 9 is a diagram for a case where $\pi/2 \leq \theta \leq \pi$.

The value of θ is an angle LOPW formed by a point O on a canvas 810, a point P placed on a straight line V passing through the point O and orthogonal to the plane of the canvas, and a point W existing in a three-dimensional space.

The distance between the point O and the point P is 1.

A curved plane G having an axisymmetric shape with respect to the straight line V as the axis is formed.

A point where a straight line connecting the point P and the point W intersects with the curved plane G is a point Q, and the value of the angle formed by the plane of the canvas 810 and a vector OQ is α. A point C is a point placed on the straight line connecting the point P and the point W, and β is the value of the angle formed by the plane of the canvas 810 and a vector OC.

k is defined as follows:

$$k = \beta/\alpha. \qquad\qquad\text{(Formula 6)}$$

The distance from the point O to the point C is m.

In a case where the curved plane G is a sphere with a radius of 1 from the point P as the center, the distance m is expressed as follows:

$$m = \sin(\theta)/\cos(\theta - \theta * k/2), \text{ where } 0 \le k \le 2. \quad\text{(Formula 7)}$$

When R represents a scale factor, the function f(θ, k) is expressed as follows:

$$f(\theta, k) = R * \sin(\theta)/\cos(\theta - \theta * k/2). \qquad\text{(Formula 8)}$$

Note that k is a parameter indicative of the strength of distortion of a fisheye lens effect, and the scale factor R is a parameter for scaling the entire transformation formula. As shown below, depending on the value of k, f(θ, k) coincides with or approximates various projection methods.

k = 0: f(θ, k) coincides with perspective projection (f(θ, k) = R * tan(θ)).
k = 0.655: f(θ, k) approximates stereographic projection (f(θ, k) ≈ 2 * R * tan(θ/2)).
k = 0.875: f(θ, k) approximates equidistant projection (f(θ, k) ≈ R * θ).
k = 1: f(θ, k) coincides with equisolid projection (f(θ, k) = 2 * R * sin(θ/2)).
k = 2: f(θ, k) coincides with orthographic projection (f(θ, k) = R * sin(θ)).

By thus setting the distortion strength parameter k and the scale factor R appropriately, fisheye perspective rulers corresponding to various fisheye lens effects can be defined.

The function f(θ, k) has the properties indicated by Formula 4 and Formulae 5-1 to 5-4.

As shown in Fig. 9, a fisheye perspective ruler can be defined when θ exceeds π/2 (90°) as well. However, depending on the value of k, the value of f(θ, k) may become infinite or fail to satisfy Formula 5-4. For this reason, it is desirable that the range of θ be limited to a range where the value of f(θ, k) will not become infinite and will satisfy Formula 5-4.

Note that pincushion distortion can be expressed when the value of k is k < 0.

Note that application examples are not described here because they have already been described earlier.

A fisheye perspective ruler can be defined using the function described above.

Also, a vanishing point may be a point where two fisheye perspective rulers intersect.

The eye level may be a single curved line drawn using the function used in generating a fisheye perspective ruler. Note that regarding the eye level, when a user draws the horizon line or the like as one fisheye perspective ruler, a computer can draw the horizon line based on user operations by snapping the drawn line to the eye level.

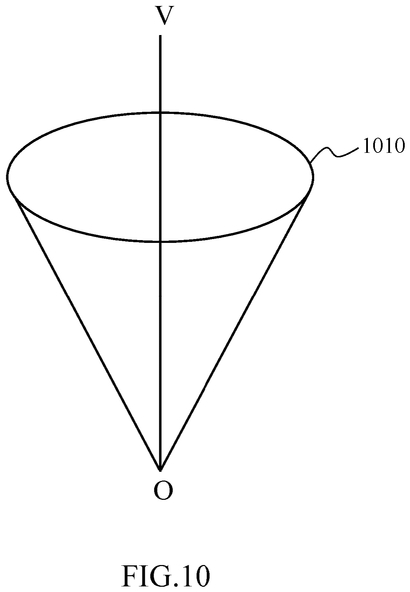

Fig. 10 is a diagram showing an example where the curved plane G is not spherical.

In Fig. 10, a curved plane G1010 has a curved plane like a cone turned upside down. In this case, a region close to the point O has stronger distortion than when the curved plane G is spherical. In this way, various fisheye perspective rulers can be defined by changing the shape of the curved plane G.

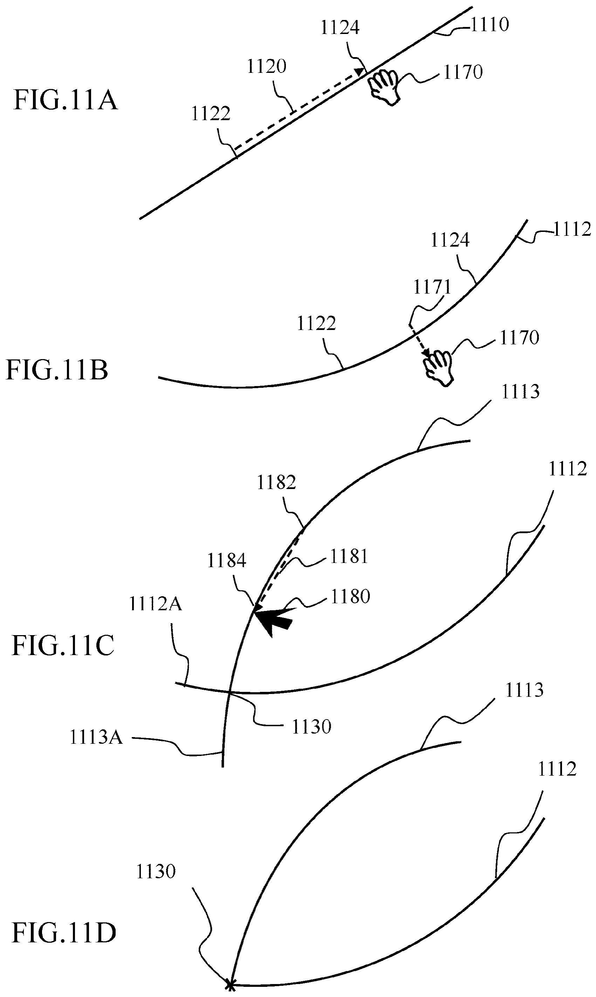

Fig. 11 is a diagram showing an example of how distortion strength and the scale factor R are set and a vanishing point is determined based on a user instruction. Figs. 11A to 11D show an example of a user interface that a user can intuitively operate to determine distortion strength, the scale factor R, and a vanishing point and to determine two fisheye perspective rulers.

In Fig. 11A, a straight line 1110 is drawn on a screen according to a user instruction (e.g., a straight line passing through a start point $D_s$ 1122 and an end point $D_e$ 1124 of a drag 1120 of a mouse cursor).

In Fig. 11B, a vector defined by a start point and an end point of the next drag of the mouse cursor 1170 is denoted as a vector 1171.

A plurality of parameters can be determined based on a length $L_d$ of the drag 1120 in Fig. 11A and a length t of the vector 1171 in Fig. 11B in terms of its component perpendicular to the straight line 1110, the parameters including a distortion strength k, the scale factor R, the lens center point O, and a radius Rp of a 180-degree circuit.

Thus, based on the parameters determined, a curved line 1112 (a line to be the basis of a fisheye perspective ruler) is drawn, the curved line 1112 being the straight line 1110 curved to pass through the start point 1122 and the end point 1124. In this event, the straight line 1110 is curved in a direction to match the direction of the vector 1171, thus obtaining the curved line 1112.

The distortion strength may be, for example, $k = t/L_d$. An expression different from this may be used, but it is desirable that k be 0 when t = 0 and monotonically increase with respect to t. When $t = L_d$, it is desirable that k = 1.

The radius of the 180-degree circle may be, for example, $Rp = L_d^2/t$. An expression different from this may be used, but it is desirable that Rp become infinite as t approaches 0, be $L_d$ when $t = L_d$, and monotonically decrease with respect to t.

The scale factor R can be found from the distortion strength k and the radius Rp of the 180-degree circle (e.g., Formulae a-1 and a-2 to be described later).

The lens center point O may be on a perpendicular bisector of a line segment connecting the point $D_s$ and the point $D_e$, and the distance between O and the straight line passing through the point $D_s$ and the point $D_e$ may be $-4(t - L_d/2)^2/L_d + L_g$. This distance is desirably a concave down function such that the distance is the minimum value 0 when t = 0, $L_d$.

In Fig. 11C, because the plurality of parameters have already been determined, by drawing, for example, a curved line 1113 (a line to be the basis of another fisheye perspective ruler) passing through a start point 1182 of a drag 1181 of a mouse cursor 1180 and defined at the position of an end point 1184 of the drag 1181, a point of intersection between the curved line 1112 and the curved line 1113 can be defined as a vanishing point 1130.

In Fig. 11D, it is desirable to delete a curved line 1112A and a curved line 1113A extending beyond the vanishing point 1130 in Fig. 11C.

Note that the eye level may be drawn as needed so as to pass through the vanishing point 1130 thus created. Also, a 180-degre circle may be drawn based on the plurality of parameters.

As thus described, at least one vanishing point and two fisheye perspective rulers can be displayed on the screen through a simple operation.

Further, by drawing two curved lines, a user can add two fisheye perspective rulers having a vanishing point at a point of intersection of the two curved lines (not shown). Also, in a case where a user draws a curved line passing through a vanishing point already drawn, a single fisheye perspective ruler passing through the vanishing point may be added (not shown).

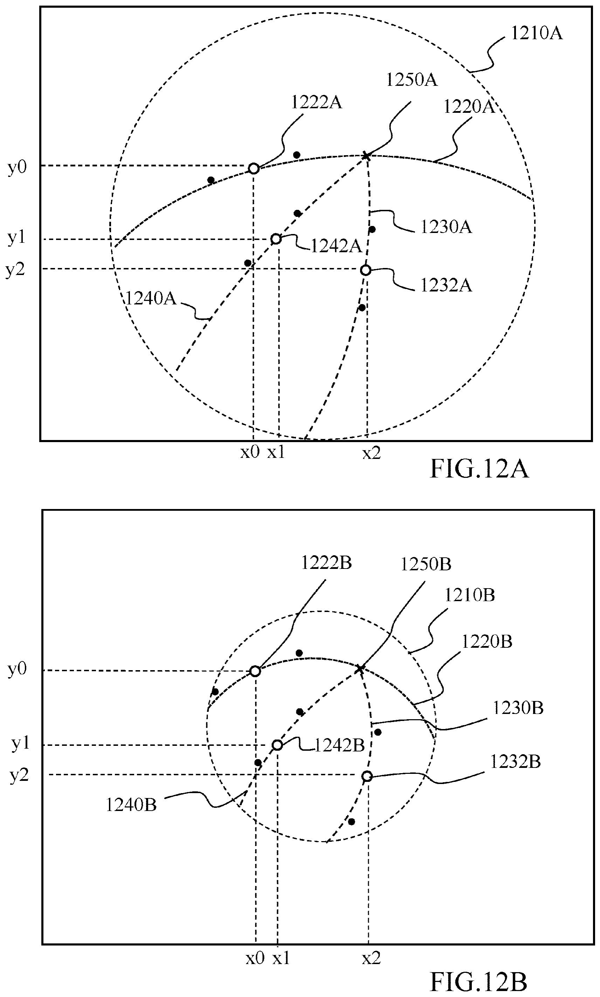

Fig. 12 is a diagram showing an example of how the display of fisheye perspective rulers transitions when a user changes distortion strength. Fig. 12A shows the display of fisheye perspective rulers before distortion strength is changed. Fig. 12B shows the display of the fisheye perspective rulers after distortion strength is changed, with the scale factor unchanged.

In Fig. 12A, an eye level 1220A and fisheye perspective rulers 1230A and 1240A are displayed within a 180-degree circle 1210A. A predetermined position 1222A instructed by a user exists on the line of the eye level. A predetermined position 1232A instructed by the user exists on the fisheye perspective ruler 1230A. A predetermined position 1242A instructed by the user exists on the fisheye perspective ruler 1240A. Then, a vanishing point 1250A exists on the line of the eye level 1220A.

Fig. 12B shows a state where a user has changed the strength of distortion of a fisheye lens effect, increasing the distortion strength.

As a result of the increase in the distortion strength, Fig. 12B has the following changes compared to Fig. 12A.

    (1) The 180-degree circle 1210A is decreased in size into a 180-degree circle 1210B.
    (2) The fisheye perspective rulers 1230A and 1240A are curved more and reduced in length, turning into fisheye perspective rulers 1230B and 1240B, respectively.

Note that because the distortion strength k is changed with the scale factor R unchanged in Figs. 12A and 12B, the 180-degree circles 1210A and 1210B differ in size. A change in the distortion strength k may be in conjunction with a change in the scale factor R so that distortion strength can be changed without changing the size of the 180-degree circle.

The following shows an example of how distortion strength and the scale factor R are in conjunction with each other when the radius of the 180-degree circle is maintained at $R_p$.

    (1) When the function $f(\theta, k)$ is defined by Formula 2:
    With $R_p$ representing the radius of the 180-degree circle, the following formula is derived from Formula 2:

$$R_p = f(\pi/2, k) = R * (k + 1)/k.$$

From the above formula, the following relation is derived:

$$R = R_p * k/(k + 1). \hspace{4cm} \text{(Formula a-1)}$$

By the distortion strength k and the scale factor R being in conjunction with each other using this Formula a-1, the distortion strength k can be changed with the radius of the 180-degree circle maintained at the certain value $R_p$.
(2) When the function f($\theta$, k) is defined by Formula 8:
With $R_p$ representing the radius of the 180-degree circle, the following formula is derived from Formula 8:

$$R_p = f(\pi/2, k) = R * \cos(\pi * (2 - k)/4).$$

From the above formula, the following relation is derived:

$$R = R_p/\cos(\pi * (2 - k)/4). \hspace{3cm} \text{(Formula a-2)}$$

By the distortion strength k and the scale factor R being in conjunction with each other using this Formula a-2, the distortion strength k can be changed with the radius of the 180-degree circle maintained at the certain value $R_p$.

Albeit the above-described change, the positions of the predetermined positions 1222A and 1222B on the line of the eye level on the canvas are both (x0, y0) and do not move. The positions of the predetermined positions 1232A and 1232B on the line of the fisheye perspective ruler 1230A on the canvas are both (x2, y2) and do not move. The positions of the predetermined positions 1242A and 1242B on the line of the fisheye perspective ruler 1240A on the canvas are both (x1, y1) and do not move.

As thus described, the positions of the predetermined positions on the canvas may stay unchanged even if distortion strength is changed. For instance, regarding a fisheye perspective ruler that a user sets along an edge of a desk, when the above-described predetermined position is set near the center of the edge of the desk, the fisheye perspective ruler can be changed in shape while maintaining the user-specified predetermined position even if distortion strength is changed. In this way, the user can fix the predetermined position on the fisheye perspective ruler, and therefore can change the degree of slope or curvature of the fisheye perspective ruler while aligning the fisheye perspective ruler with the target image position on a reference image. A fisheye perspective ruler having a shape desired by the user can thus be set more easily.

The advantage described above is also true to the predetermined position set on the line of the eye level. A situation can be avoided where changing distortion strength changes the positions or shapes of the eye level and the fisheye perspective ruler to positions or shapes unintended by the user.

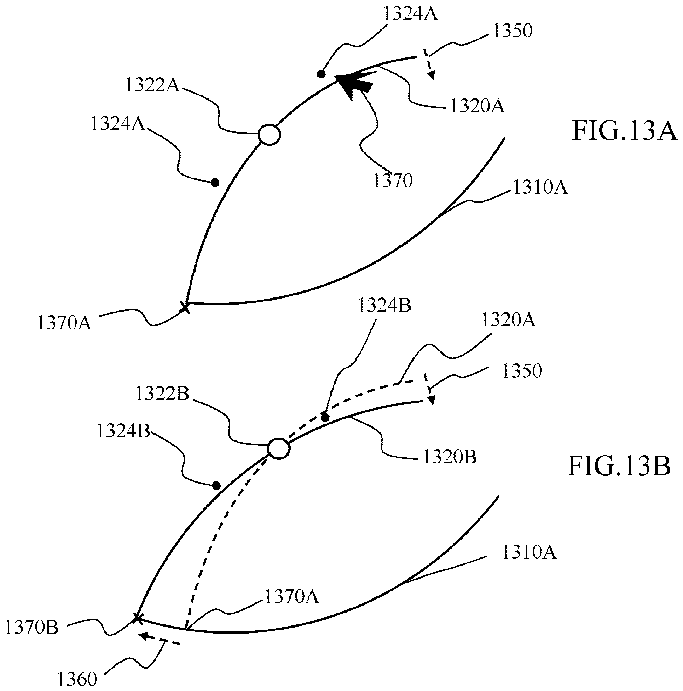

Fig. 13 is a diagram illustrating how a vanishing point moves as a result of a change in the slope of a fisheye perspective ruler. Fig. 13A shows a state before the change of the slope of the fisheye perspective ruler. Fig. 13B shows a state after the change of the slope of the fisheye perspective ruler.

In Fig. 13A, a fisheye perspective ruler 1320A has a vanishing point 1370A, and there are two handles 1324A with which a user can adjust the slope. By being dragged, any one of the two handles 1324A can provide the user with a desirable operation to be described below. Also, a predetermined position 1322A is set on the fisheye perspective ruler 1320A. For example, by dragging and moving one of the handles 1324A using a cursor 1370, a user can rotate the fisheye perspective ruler 1320A in the direction of an arrow 1350 about the predetermined position 1322A.

In Fig. 13B, according to the above-described drag operation by the user, the fisheye perspective ruler 1320A denoted with a broken line is changed in curvature while being rotated in the direction of the arrow 1350, reaching the state of a fisheye perspective ruler 1320B. In accordance with this rotation and change in curvature, the position of the vanishing point 1370A moves to the position of a vanishing point 1370B. As a result of the movement of the vanishing point, a fisheye perspective ruler 1310A extends to the vanishing point 1370B by the amount indicated by an arrow 1360.

As thus described, the position of a vanishing point can be moved when, based on a user operation, the slope of the fisheye perspective ruler 1320A is changed with the predetermined position 1322A being fixed.

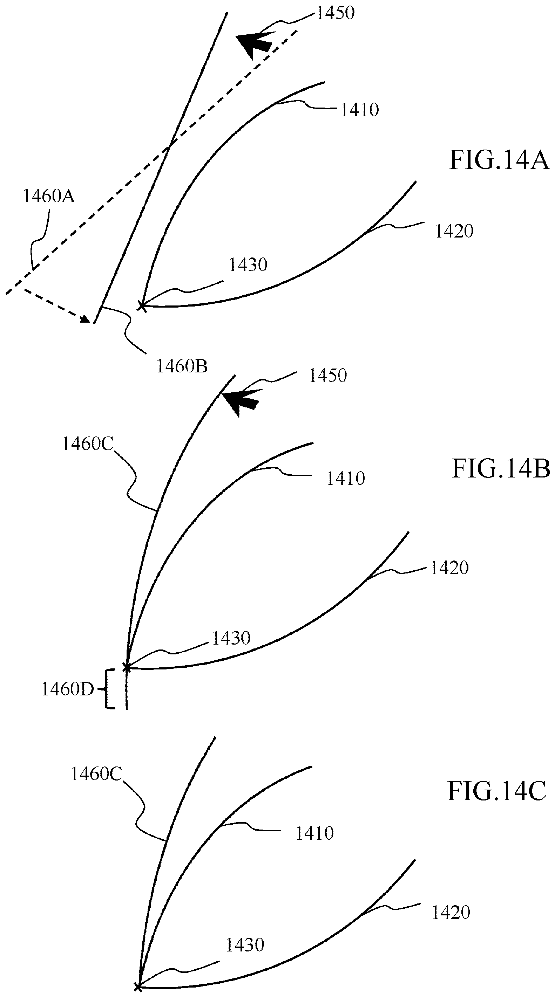

Fig. 14 is a diagram showing an example of adding a fisheye perspective ruler. Figs. 14A to 14C show an example of adding one fisheye perspective ruler.

In Fig. 14A, fisheye perspective rulers 1410 and 1420 share a vanishing point 1430. For example, when a user presses a mouse button at the position of a cursor 1450, a straight line 1460A is displayed. When a user drags the cursor 1450 while holding down the mouse, the straight line 1460A rotates to, for example, a straight line 1460B in accordance with the drag. Note that although the straight lines 1460A and 1460B are displayed in Fig. 14A, curved lines may be displayed.

In Fig. 14B, when the user keeps dragging, a fisheye perspective ruler 1460C snaps to the vanishing point 1430.

In Fig. 14C, when the user finishes dragging (when the user releases the mouse button), a curved line 1460D protruding beyond the vanishing point 1430 of the fisheye perspective ruler 1460C disappears. As a result of this operation, the new fisheye perspective ruler 1460C sharing the existent vanishing point 1430 is generated.

Note that the state of Fig. 14A may be omitted, so that when a user drags a mouse, the fisheye perspective ruler 1460C passing through the cursor 1450 in Fig. 14B may be displayed. When the user releases the mouse button, the curved line 1460D protruding beyond the vanishing point 1430 of the fisheye perspective ruler 1460C disappears. As a result of this operation, the new fisheye perspective ruler 1460C sharing the existent vanishing point 1430 may be generated.

Also, when there are a plurality of vanishing points on a canvas, in Fig. 14B, the fisheye perspective ruler 1460C may snap to one of the vanishing points which is closest to the position of the fisheye perspective ruler 1460C in accordance with an operation of the cursor 1450 instructed by the user (not shown).

The operation described above can facilitate addition of a new fisheye perspective ruler passing through a desired vanishing point.

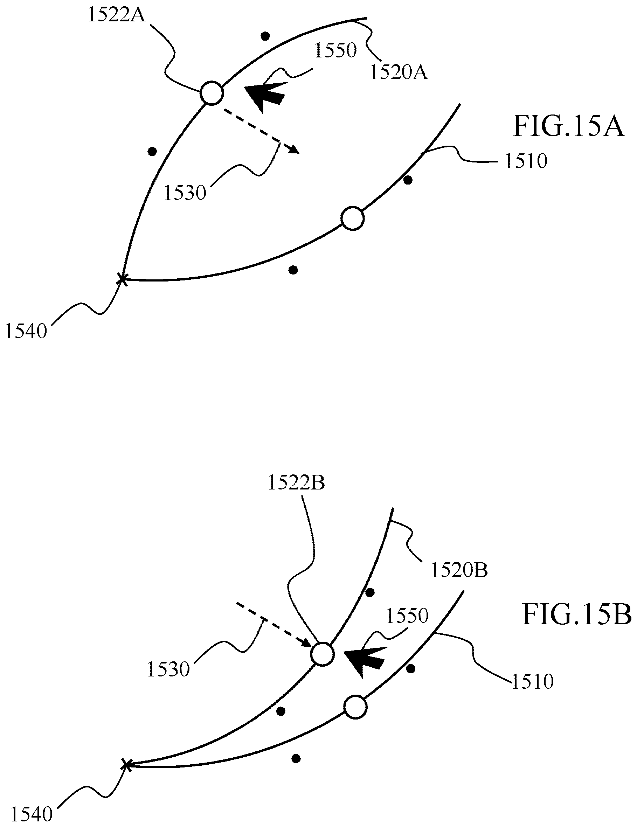

Fig. 15 is a diagram showing a state where a predetermined position on a fisheye perspective ruler is moved as instructed by a user. Fig. 15A shows a state before the predetermined position is moved. Fig. 15B shows a state after the predetermined position is moved.

In Fig. 15A, a fisheye perspective ruler 1520A has a vanishing point 1540. The user drags a predetermined position 1522A in the direction of an arrow 1530 using a mouse cursor 1550.

Fig. 15B shows a state after the drag. The predetermined position is moved by the drag from the predetermined position 1522A to a predetermined position 1522B. With this movement, the curved line of the fisheye perspective ruler is changed appropriately. Note that the vanishing point 1540 and another fisheye perspective ruler 1510 do not need to be changed.

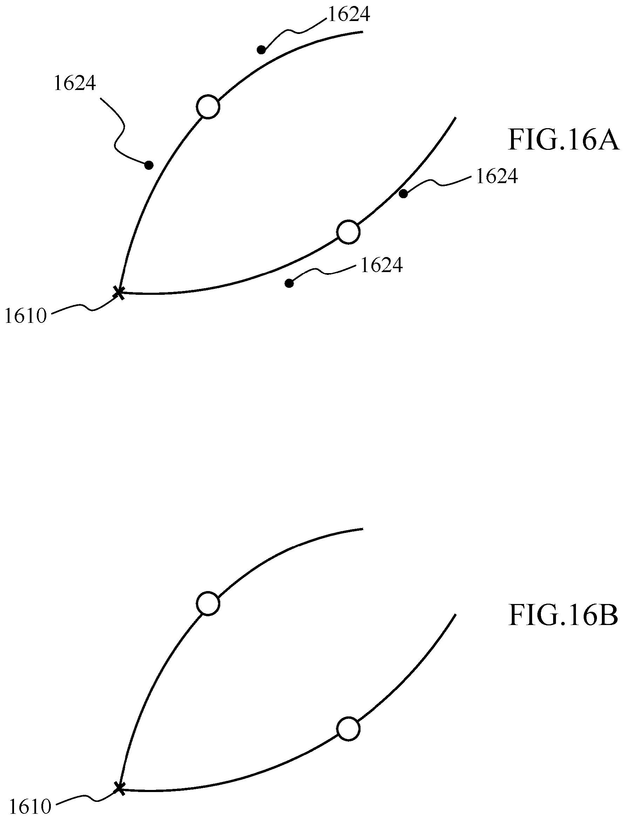

Fig. 16 shows an example of the display of handles are displayed when a user issues an instruction to fix the position of a vanishing point. Fig. 16A shows a state before the user issues an instruction to fix a vanishing point. Fig. 16B shows a state after the user issues an instruction to fix a vanishing point.

In Fig. 16A, because moving a vanishing point 1610 is permitted, four handles 1624 for changing the slope of fisheye perspective rulers are displayed. In this case, by operating one of the four handles 1624 with a mouse or the like, the user can change the slope of a fisheye perspective ruler. This change causes the vanishing point 1610 to move.

In Fig. 16B, in a state where moving the vanishing point 1610 is not permitted, the four handles 1624 for changing the slope of the fisheye perspective rulers may be not displayed. This configuration makes the user unable to operate the slope of the fisheye perspective ruler and thus prevents the vanishing point 1610 from being moved by the operation.

This also enables the vanishing point 1610 not to move even if a user drags the vanishing point 1610 with a cursor. Note that the position of a vanishing point desirably does not move even if a user moves a predetermined position.

Note that it is desirable not to move a vanishing point not permitted to move even if a user changes distortion strength. Note that a vanishing point may move in cases where the position of the vanishing point becomes unsustainable due to a change in distortion strength or the scale factor R, such as the vanishing point moving beyond the lens circle.

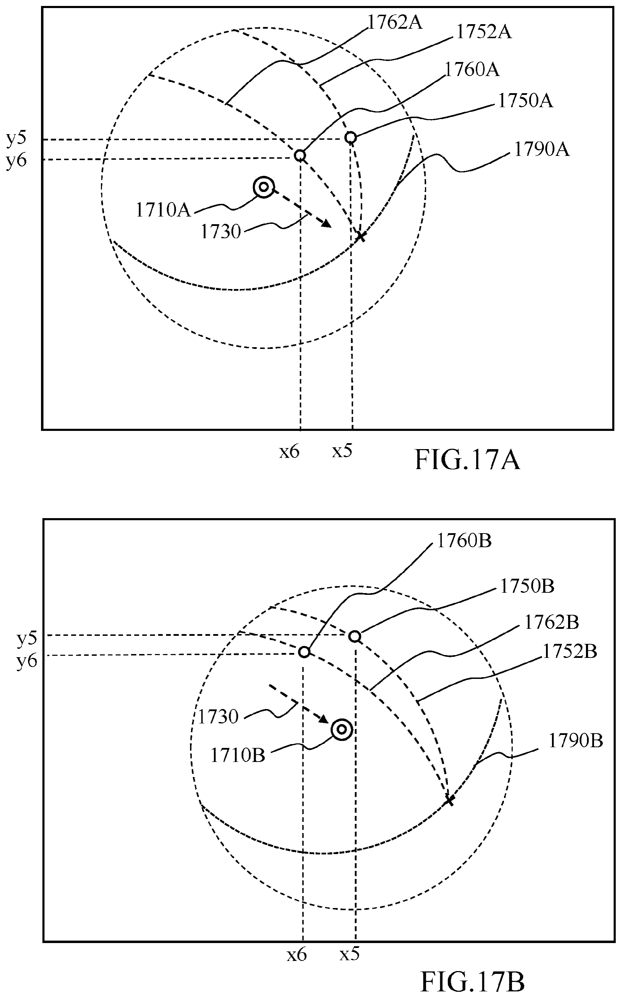

Fig. 17 is a diagram showing how a state transitions when the point O (the lens center point O) where the straight line V along the center axis of a virtual lens intersects with the canvas is moved. Fig. 17A is a diagram of a state before the lens center point O is moved. Fig. 17B is a diagram of a state after the lens center point O is moved.

The position of the lens center point O (1710A) in Fig. 17A moves in the direction of an arrow 1730, moving to the lens center point O (1710B) in Fig. 17B. The coordinates (x5, y5) of a predetermined position 1750A and the coordinates (x6, y6) of a predetermined position 1760A in Fig. 17A remain at the coordinates (x5, y5) of a predetermined position 1750B and the coordinates (x6, y6) of a predetermined position 1760B in Fig. 17B, respectively, and do not move on the canvas. Note that the 180-degree circle and the vanishing point move following the movement of the lens center point O. With this, in Figs. 17A and 17B, a fisheye perspective ruler 1752A and a fisheye perspective ruler 1762A change in shape into a fisheye perspective ruler 1752B and a fisheye perspective ruler 1762B, respectively. It is desirable that an eye level 1790A, 1790B and a predetermined position existing on the line of the eye level move following the movement of the lens center point.

Thus, in a case where a reference image is displayed as an overlay, a misalignment between the reference image and a predetermined position can be prevented.

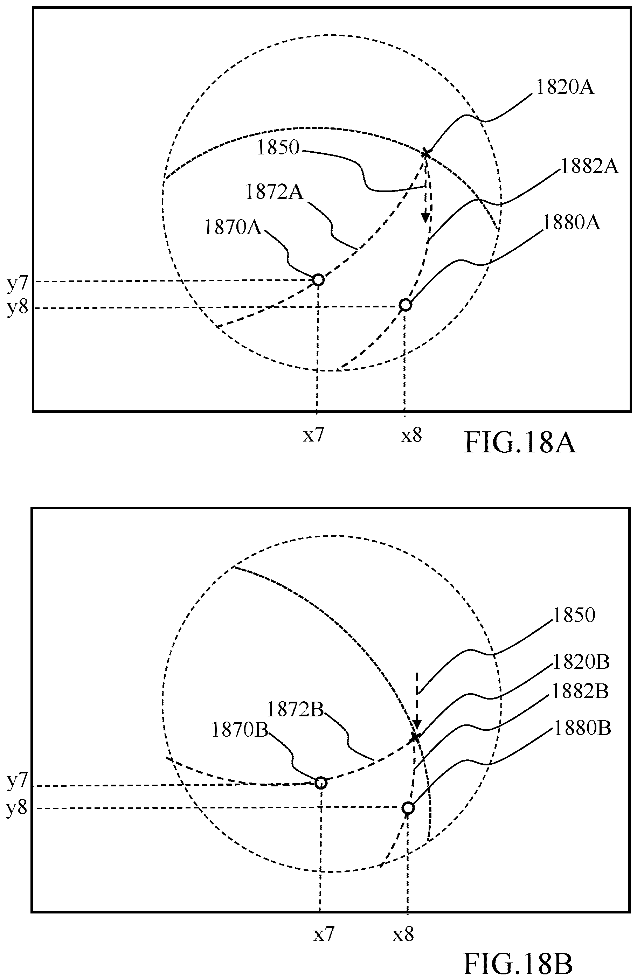

Fig. 18 is a diagram showing how a state transitions when a vanishing point is moved. Fig. 18A is a diagram of a state before the vanishing point is moved. Fig. 18B is a diagram of a state after the vanishing point is moved.

In Fig. 18A, a vanishing point 1820A is moved in the direction of an arrow 1850. Fig. 18B shows the position of a vanishing point 1820B after the move. In this case, the coordinates (x7, y7) of a predetermined position 1870A and the coordinates (x8, y8) of a predetermined position 1880A in Fig. 18A remain at the coordinates (x7, y7) of a predetermined position 1870B and the coordinates (x8, y8) of a predetermined position 1880B in Fig. 18B, respectively, and do not move on the canvas. With the movement of the vanishing point 1820A to the vanishing point 1820B in Fig. 18, a fisheye perspective ruler 1872A and a fisheye perspective ruler 1882A change in shape into a fisheye perspective ruler 1872B and a fisheye perspective ruler 1882B, respectively.

The following are example behaviors performed when a vanishing point is dragged. The behavior may differ depending on whether a vanishing point is on the line of the eye level. Also, in a case where a vanishing point is on the line of the eye level, the behavior may differ depending on whether the vanishing point is the first vanishing point or the second or subsequent vanishing point.

(1) When the vanishing point is the first vanishing point on the line of the eye level, and the eye level is fixed:

- The position of the vanishing point moves on the line of the eye level.
- The eye level does not change even if the vanishing point is moved.

(2) When the vanishing point is the first vanishing point on the line of the eye level, and the eye level is not fixed:

- There is no restriction as to the position of the vanishing point.
- The eye level changes as the vanishing point is moved.

(3) When the vanishing point is the second or subsequent vanishing point on the line of the eye level or not on the line of the eye level:

- There is no restriction as to the position of the vanishing point (however, a behavior where the vanishing point snaps to the eye level may be employed).
- The eye level does not change even if the vanishing point is moved.

Thus, in a case where a reference image is displayed as an overlay, a misalignment between the reference image and a predetermined image can be prevented.

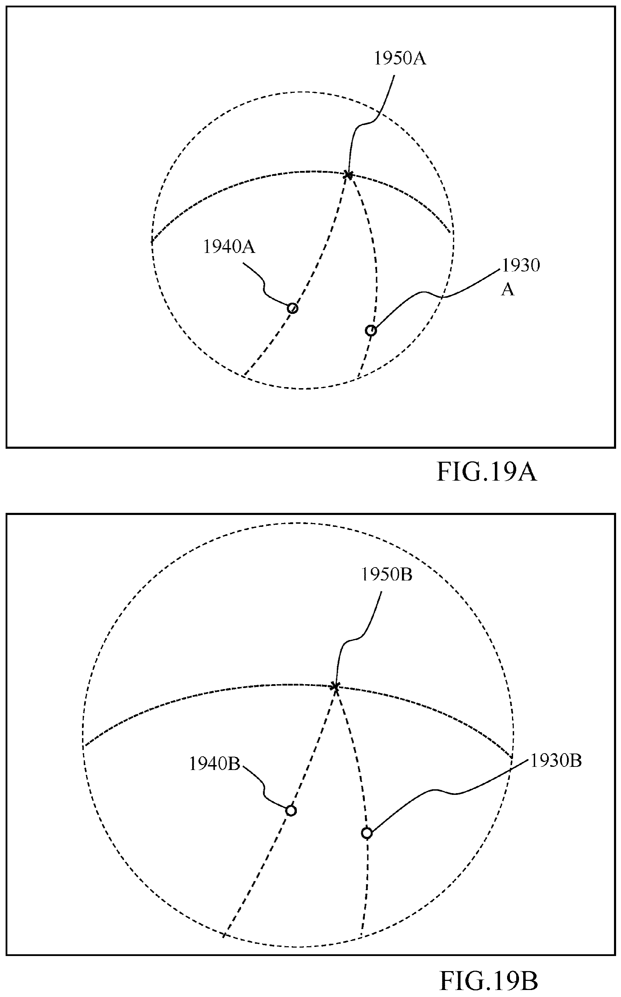

Fig. 19 is a diagram showing how a state transitions when distortion strength is changed. Fig. 19A is a diagram showing a state before distortion strength is changed. Fig. 19B is a diagram showing a state after distortion strength is changed.

In a case where a vanishing point 1950A is fixed, it is desirable to maintain the coordinates of the fixed vanishing point. When none of the vanishing points is instructed to be fixed, it is desirable to maintain the coordinates of all the predetermined positions.

Fig. 19A shows a case where there is no instruction to fix the position of the vanishing point 1950A. In this case, the coordinates of predetermined positions 1930A and 1940A in Fig. 19A are the same as the coordinates of the predetermined positions 1930B and 1940B in Fig. 19B, respectively.

By comparison, if there is an instruction to fix the coordinates of the vanishing point 1950A in Fig. 19A, it is desirable not to change the position of a vanishing point 1950B in Fig. 19B. In this case, the coordinates of the predetermined positions 1930A and 1940A do not have to be the same as the coordinates of the predetermined positions 1930B and 1940B in Fig. 19B, respectively.

Thus, in a case where distortion strength is changed, a user can select whether to fix the position of a vanishing point or to fix the predetermined positions.

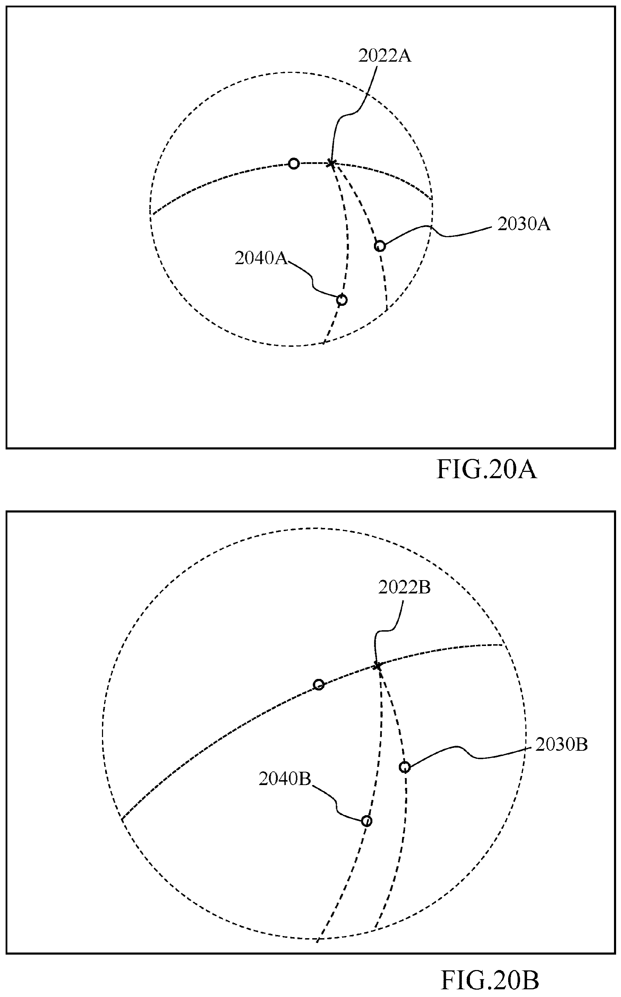

Fig. 20 is a diagram showing how a state transitions when the scale factor R is changed. Fig. 20A is a diagram showing a state before the scale factor R is changed. Fig. 20B is a diagram showing a state after the scale factor R is changed.

In a case where a vanishing point 2022A is fixed, it is desirable to maintain the coordinates of the fixed vanishing point. When none of the vanishing points is instructed to be fixed, it is desirable to maintain the coordinates of all the predetermined positions.

Fig. 20A shows a case where there is no instruction to fix the position of the vanishing point 2022A. In this case, the coordinates of predetermined positions 2030A and 2040A in Fig. 20A are the same as the coordinates of predetermined positions 2030B and 2040B in Fig. 20B, respectively.

By comparison, if there is an instruction to fix the coordinates of the vanishing point 2022A in Fig. 20A, it is desirable not to change the position of a vanishing point 2022B in Fig. 20B. In this case, the coordinates of the predetermined positions 2030A and 2040A do not have to be the same as the coordinates of the predetermined positions 2030B and 2040B in Fig. 20B, respectively.

This enables a user to select whether to fix the position of a vanishing point or to fix a predetermined position when the scale factor R is changed.

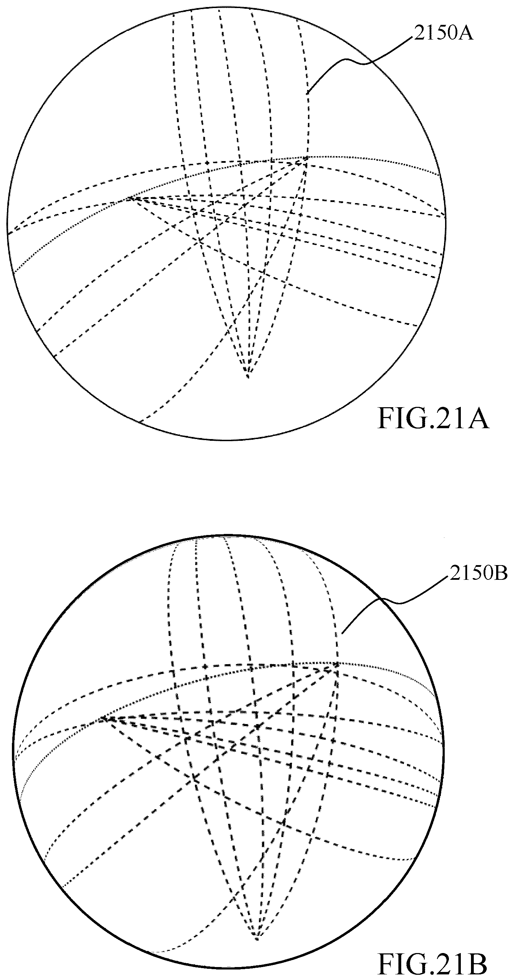

Fig. 21 is a diagram showing how the display of fisheye perspective rulers changes. Fig. 21A is a diagram showing a state before distortion strength is changed. Fig. 21B is a diagram showing a state after distortion strength is changed.

Upon an instruction to increase distortion strength, the display of a fisheye perspective ruler 2150A in Fig. 21A is changed to a fisheye perspective ruler 2150B in Fig. 21B. Upon an instruction to increase distortion strength, the shapes of the other fisheye perspective rulers and the eye level are similarly changed in their display as shown in Figs. 21A and 21B.

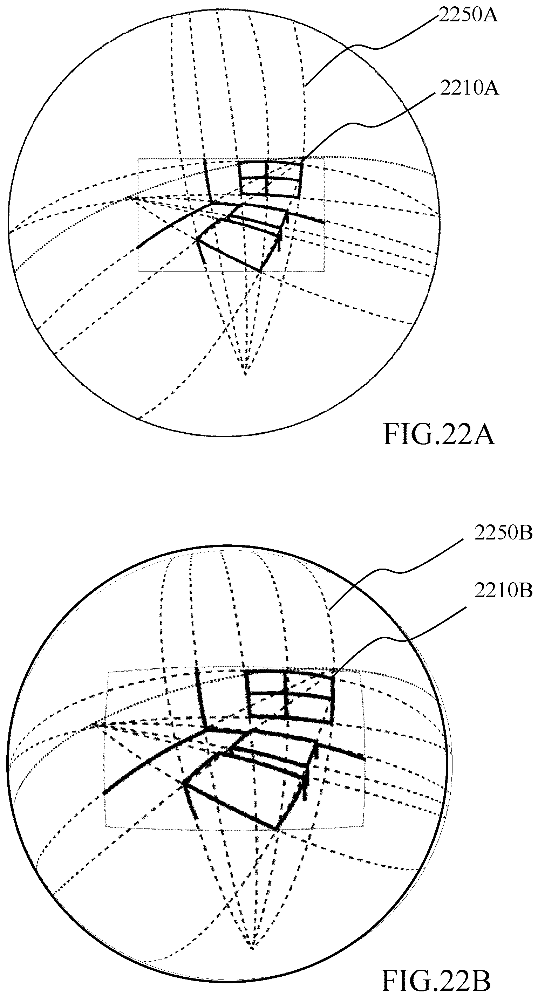

Fig. 22 is a diagram showing how curved lines already drawn along fisheye perspective rulers change as a result of a change in the display of the fisheye perspective rulers. Fig. 22A is a diagram showing a state before distortion strength is changed. Fig. 22B is a diagram showing a state after distortion strength is changed.

When the display of a fisheye perspective ruler shown in Fig. 22A (e.g., a fisheye perspective ruler 2250A) is changed to a fisheye perspective ruler shown in Fig. 22B (e.g., a fisheye perspective ruler 2250B), an already drawn curved line 2210A shown in Fig. 22A is changed to a curved line 2210B shown in Fig. 22B.

In this way, the display of the fisheye perspective ruler 2250A is changed to the fisheye perspective ruler 2250B due to a change in distortion strength, and in conformity with this change, the curved line 2210A already drawn along the fisheye perspective ruler changes to the curved line 2210B as well.

In this way, in accordance with a particular change in distortion strength, a fisheye perspective ruler may be changed, and a curved line already drawn may be changed as well.

This saves the user from the trouble of doing the drawing all over again even if a fisheye perspective ruler is changed.

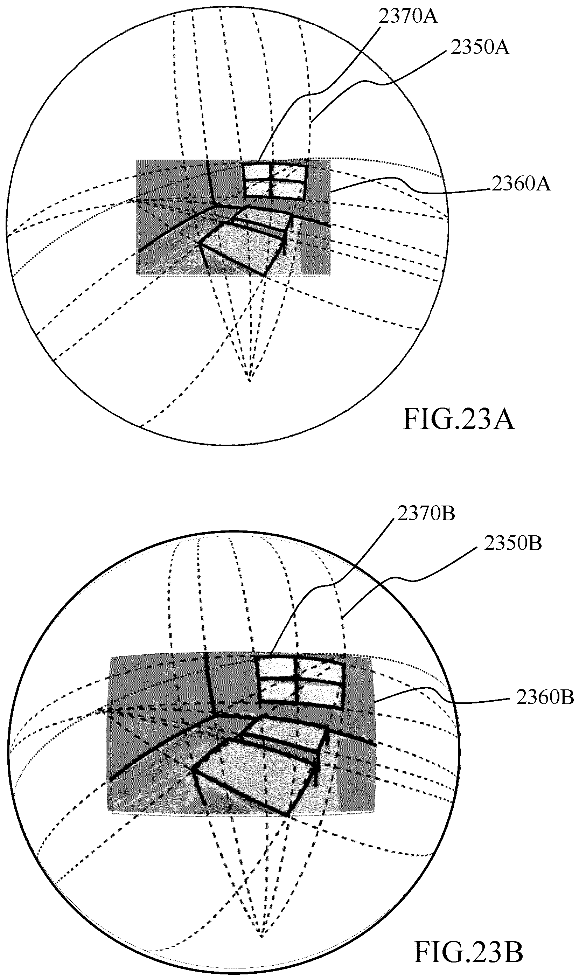

Fig. 23 is a diagram showing how, as a result of a change in the display of a fisheye perspective ruler, not only a curved line already drawn along the fisheye perspective ruler, but also a reference image used as a reference is changed. Fig. 23A is a diagram showing a state before distortion strength is changed. Fig. 23B is a diagram showing a state after distortion strength is changed.

Thus, even if a fisheye perspective ruler is changed, the user is saved from the trouble of doing the drawing all over again, and also, a reference image itself, which is an image used as a reference for the drawing, is also changed in shape. Thus, in continuing the drawing in more detail, the user can easily refer to the changed details of the reference image and thus can continue the drawing more easily.

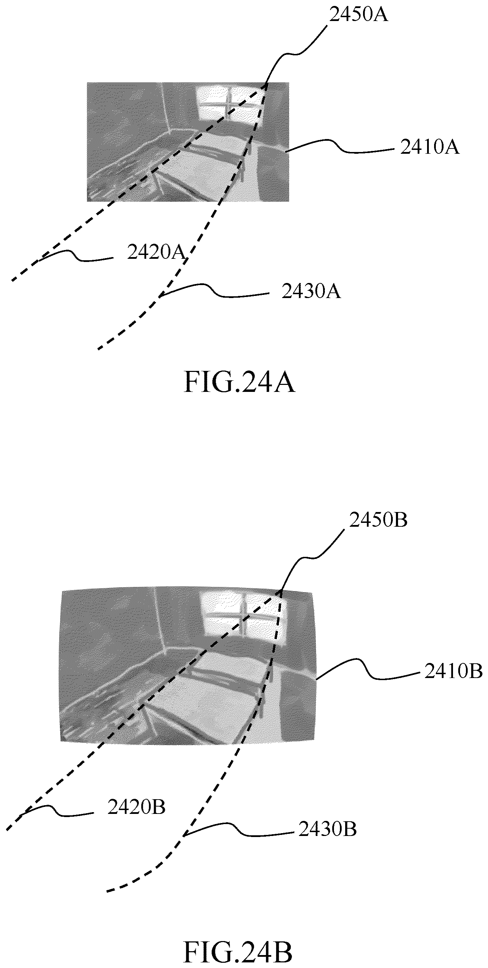

Fig. 24 is a diagram showing how a reference image is changed when the display of a fisheye perspective ruler is changed. Fig. 24A is a diagram showing a state before the change. Fig. 24B is a diagram showing a state after the change.

When either a fisheye perspective ruler 2420A or a fisheye perspective ruler 2430A in Fig. 24A is changed in shape to a fisheye perspective ruler 2420B, 2430B in Fig. 24B, or when the position of a vanishing point 2450A in Fig. 24A is changed to the position of a vanishing point 2350B in Fig. 24B, the reference image used as a reference is changed in shape as well. A drawn image may also be changed in conformity with this change (not shown).

In this way, in conformity with a change in the shape of a fisheye perspective ruler based on a user instruction, such as a change in the curvature of a fisheye perspective ruler or a change in the position of a vanishing point, a drawn image and/or a reference image used as a reference can be easily changed in shape in conformity with the change.

<Embodiment 2>

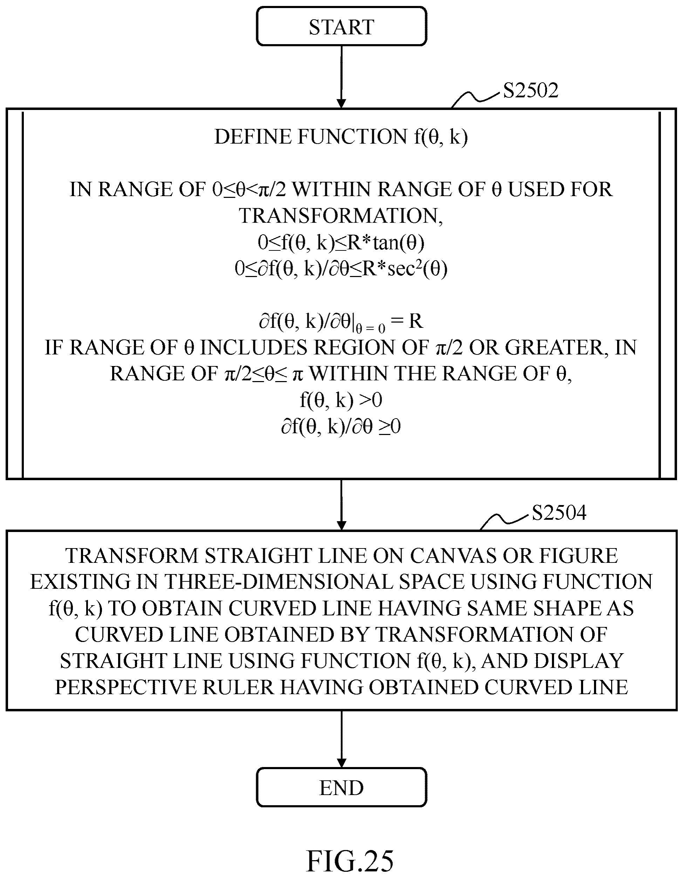

Fig. 25 is a flowchart of generating the curved line of a fisheye perspective ruler used for drawing with a fisheye lens effect. The following describes the steps in Fig. 25. [Step S2502] The function $f(\theta, k)$ is defined.

In the range of $0 \leq \theta < \pi/2$ within the range of $\theta$ used for transformation, the function $f(\theta, k)$ satisfies

$$0 \leq f(\theta, k) \leq R * \tan(\theta) \text{ and} \qquad \text{(Formula 9)}$$

$$0 \leq \partial f(\theta, k)/\partial\theta \leq R * \sec^2(\theta), \text{ and} \qquad \text{(Formula 10-1)}$$

$$\partial f(\theta, k)/\partial\theta|_{\theta=0} = R \qquad \text{(Formula 10-2)}$$

is satisfied, and in a case where the range of $\theta$ includes a region of $\pi/2$ or greater, in the range of $\pi/2 \leq \theta \leq$ nm within the range of $\theta$, the function $f(\theta, k)$ satisfies

$$f(\theta, k) > 0, \text{ and} \qquad \text{(Formula 11)}$$

$$\partial f(\theta, k)/\partial\theta \geq 0. \qquad \text{(Formula 12)}$$

The meanings of Formulae 9, 10-1, and 10-2 are as already described regarding Formulae 4, 5-1, and 5-2.

From the condition Formula 11, tan(θ) is omitted because tan (θ) in Formula 9 is a negative value when θ exceeds π/2 (90°).

Formula 12 indicates that the function is a monotonically increasing function also when θ exceeds π/2 (90°).

For example, as a result of transforming a straight line on a canvas using a function having the conditions described above, a curved line approximating a curved line obtained by capturing a straight line with a fisheye lens is obtained. By using the thus-obtained curved line for a fisheye perspective ruler, a line which would be drawn as a straight line with the perspective projection method can be drawn as a curved line approximating an image captured through a fisheye lens.

[Step S2504] A straight line on the canvas or a figure existing in a three-dimensional space is transformed using the function f (θ, k) to obtain a curved line having the same shape as a curved line obtained by transformation of a straight line using the function f(θ, k), and a fisheye perspective ruler having the curved line thus obtained is displayed.

By this Step S2504, a fisheye perspective ruler having a curved line with which an image with a fisheye lens effect can be drawn can be displayed over the canvas.

By using this fisheye perspective ruler to draw on a canvas, a user can draw an illustration with a fisheye lens effect.

Note that if, for example, the curved line of a fisheye perspective ruler is generated by transformation of the locus of a circuit, a user can use the fisheye perspective ruler having this curved line to easily draw, on a canvas, a curved line which would be captured by a capture of a circle through a fisheye lens.

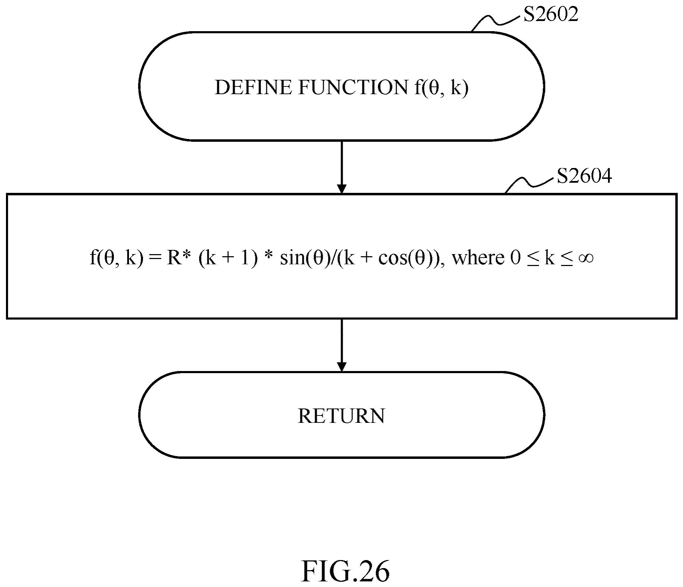

Fig. 26 is a flowchart showing processing using the function described using Figs. 6 and 7.

[Step S2602] This indicates that this step serves a subroutine of Step S2502 in Fig. 25.
[Step S2604] The following formula is applied as the function f (θ, k):

$$f(\theta, k) = R * (k + 1) * \sin(\theta)/(k + \cos(\theta)),$$

where $0 \le k \le \infty$.

This function has been described using Figs. 6 and 7.

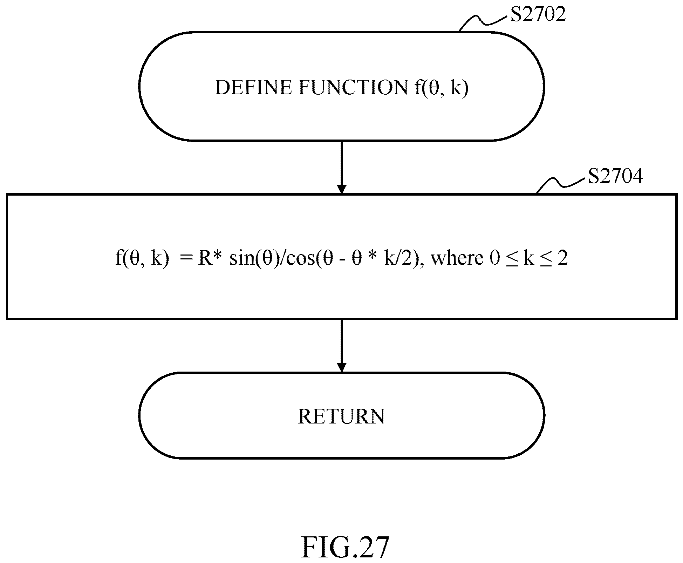

Fig. 27 is a flowchart showing processing using the function described with Figs. 8 and 9.

[Step S2702] This indicates that this step serves as a subroutine of Step S2502 in Fig. 25.
[Step S2704] The following formula is applied as the function f (θ, k):

$$f(\theta, k) = R * \sin(\theta)/\cos(\theta - \theta * k/2),$$

where $0 \le k \le 2$.

This function has been described using Figs. 8 and 9.

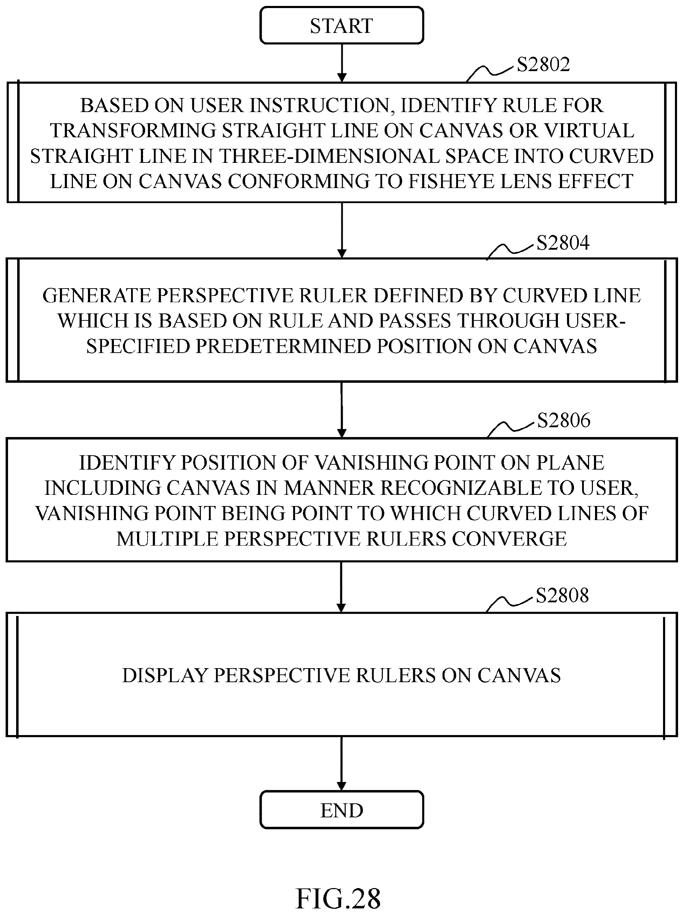

Fig. 28 is a flowchart of displaying a fisheye perspective ruler on a canvas.

The following describes the steps.

[Step S2802] Based on a user instruction, a rule is identified for transforming a straight line on a canvas or a virtual straight line in a three-dimensional space into a curved line on a canvas in conformity with a fisheye lens effect.

A specific example of this rule has already been described, so a repetitive description is avoided.

[Step S2804] A fisheye perspective ruler defined by a curved line which is based on the rule and passes through a user-specified predetermined position on a canvas is generated.
[Step S2806] The position of a vanishing point which is a point to which curved lines of a plurality of fisheye perspective rulers converge is identified on a plane including the canvas in a manner recognizable to the user.
[Step S2808] The fisheye perspective rulers are displayed on the canvas.

By the above processing, the fisheye perspective rulers can be displayed on the canvas.

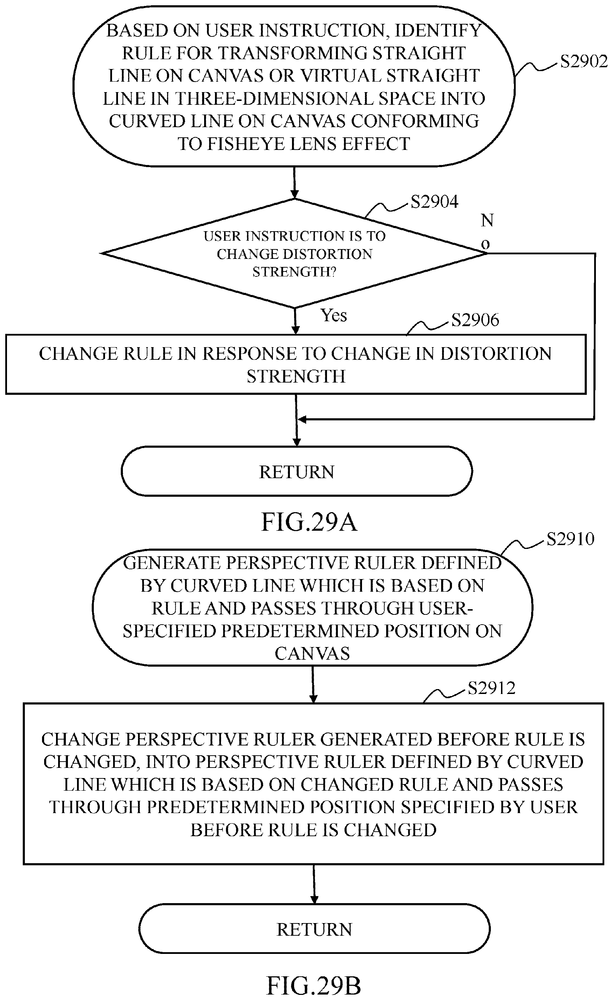

Figs. 29A and 29B are flowcharts showing example subroutines of Step S2802 and Step S2804 described above.

[Step S2902] This indicates that a flow subsequent to this Step S2902 is a subroutine of Step S2802.
[Step S2904] It is checked whether there is a user instruction to change distortion strength. If the check result is in the affirmative (YES), the processing proceeds to Step S2906. If the check result is in the negative (NO), the processing returns.

[Step S2906] The rule is changed in response to the change in distortion strength.

The following process flow shown in Fig. 29B is executed after the above processing.

[Step S2910] This indicates that a flow subsequent to this Step S2910 is a subroutine of Step S2804.
[Step S2912] The fisheye perspective ruler generated before the rule is changed is changed to a fisheye perspective ruler defined by a curved line which is based on the changed rule and passes through a predetermined position specified by the user before the rule is changed.

By the above processing, the curved line of a fisheye perspective ruler is appropriately changed as a result of a change in distortion.

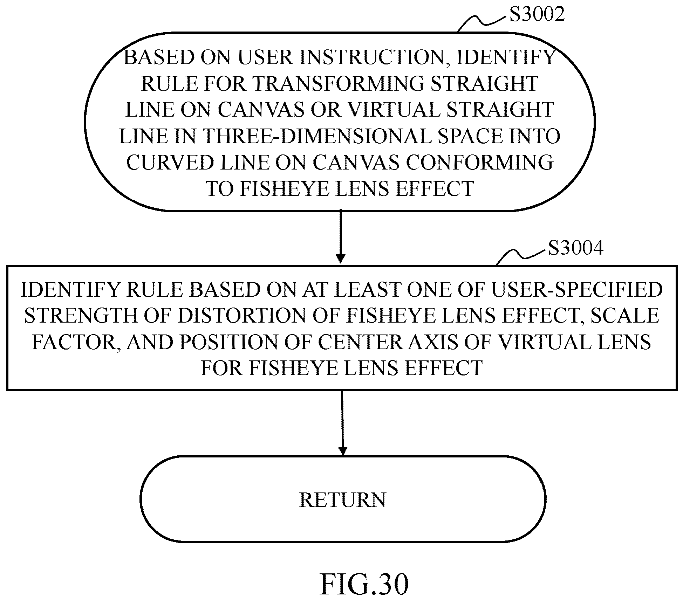

Fig. 30 shows a flow related to rule identification.

[Step S3002] This indicates that a flow subsequent to this Step S3002 is a subroutine of Step S2802.
[Step S3004] A rule is identified based on at least one of the user-specified strength of distortion of a fisheye lens effect, a scale factor, and the position of the center point of the virtual lens of the fisheye lens effect.

Parameters not specified by the user can be determined in advance.

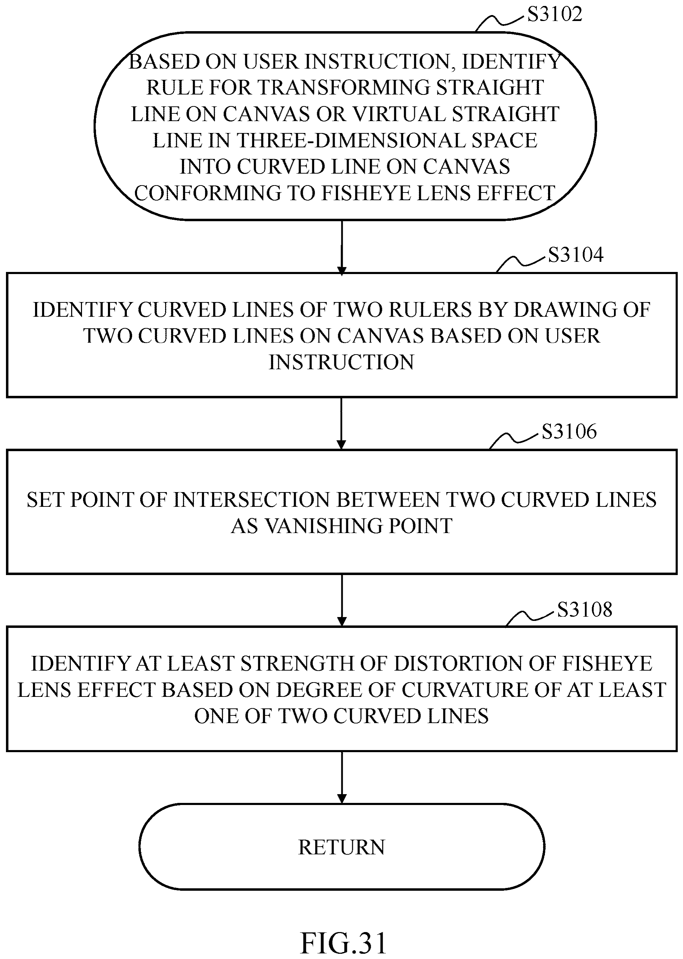

Fig. 31 shows another flowchart related to rule identification.

[Step S3102] This indicates that a flow subsequent to this Step S3102 is a subroutine of Step S2802.
[Step S3104] The curved lines of two fisheye perspective rulers are identified by drawing of two curved lines on a canvas based on a user instruction.
[Step S3106] A point of intersection between the two curved lines is set as a vanishing point.
[Step S3108] At least the strength of distortion of a fisheye lens effect is identified based on the degree of curvature of at least one of the two curved lines.

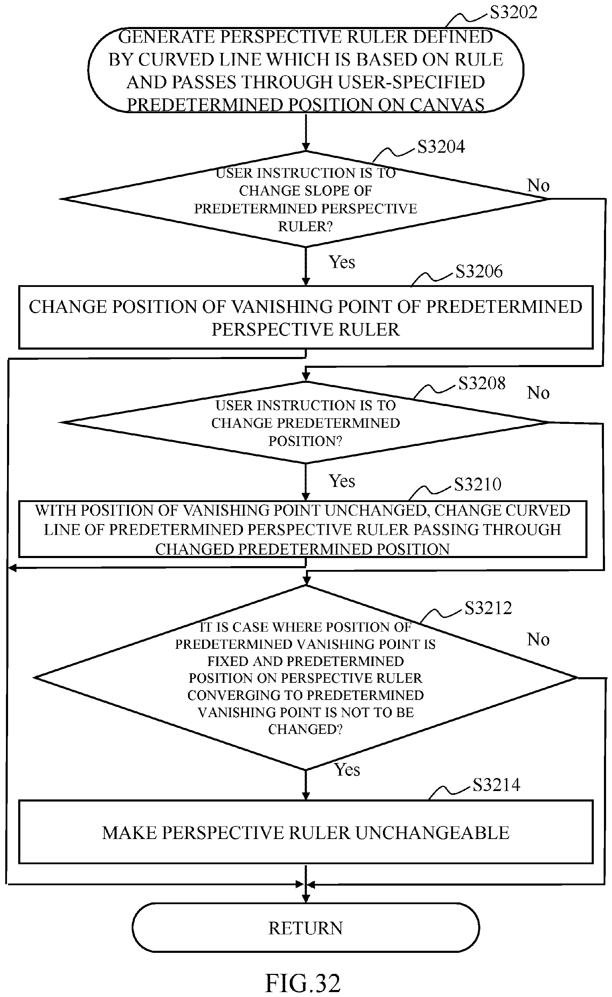

Fig. 32 is a flowchart showing an example process flow of generating a fisheye perspective ruler.

[Step S3202] This indicates that a flow subsequent to this Step S3202 is a subroutine of Step S2804.
[Step S3204] It is checked whether a user instruction is to change the slope of a predetermined fisheye perspective ruler. If the check result is in the affirmative (YES), the processing proceeds to Step S3206. If the check result is in the negative (NO), the processing proceeds to Step S3208.
[Step S3206] The position of a vanishing point of the predetermined fisheye perspective ruler is changed, and the processing returns.
[Step S3208] It is checked whether there is a user instruction to change the predetermined position. If the check result is in the affirmative (YES), the processing proceeds to Step S3210. If the check result is in the negative (NO), the processing proceeds to Step S3212.
[Step S3210] With the position of the vanishing point unchanged, the curved line of the predetermined fisheye perspective ruler passing through the changed predetermined position is changed, and the processing returns.
[Step S3212] It is checked whether it is a case where the position of a predetermined vanishing point is fixed and a predetermined position on a fisheye perspective ruler converging to the predetermined vanishing point is not to be changed. If the check result is in the affirmative (YES), the processing proceeds to Step S3214. If the check result is in the negative (NO), the processing returns.
[Step S3214] The fisheye perspective ruler is made unchangeable, and the processing returns.

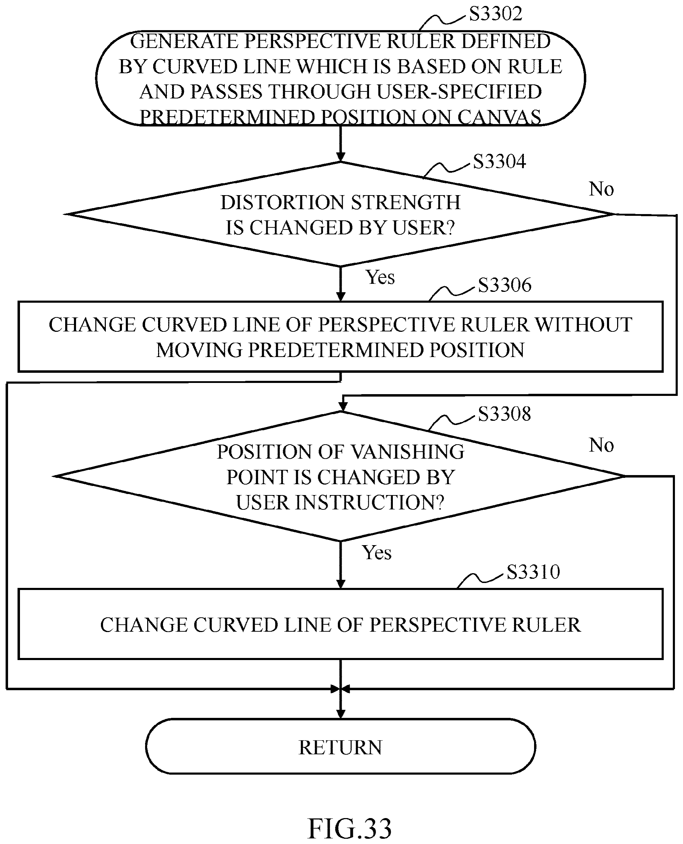

Fig. 33 is a flowchart showing another example of a process flow of generating a fisheye perspective ruler.

[Step S3302] This indicates that a flow subsequent to this Step S3302 is a subroutine of Step S2804.
[Step S3304] It is checked whether distortion strength has been changed by a user. If the check result is in the affirmative (YES), the processing proceeds to Step S3306. If the check result is in the negative (NO), the processing proceeds to Step S3308.
[Step S3306] The curved line of the perspective ruler is changed without moving the predetermined position, and the processing returns. Not changing the predetermined position makes it possible not to move the position of the fisheye perspective ruler on the predetermined position the user is focusing on.
[Step S3308] It is checked whether the position of a vanishing point has been changed by a user instruction. If the check result is in the affirmative (YES), the processing proceeds to Step S3310. If the check result is in the negative (NO), the processing returns.

[Step S3310] The curved line of the fisheye perspective ruler is changed, and the processing returns.

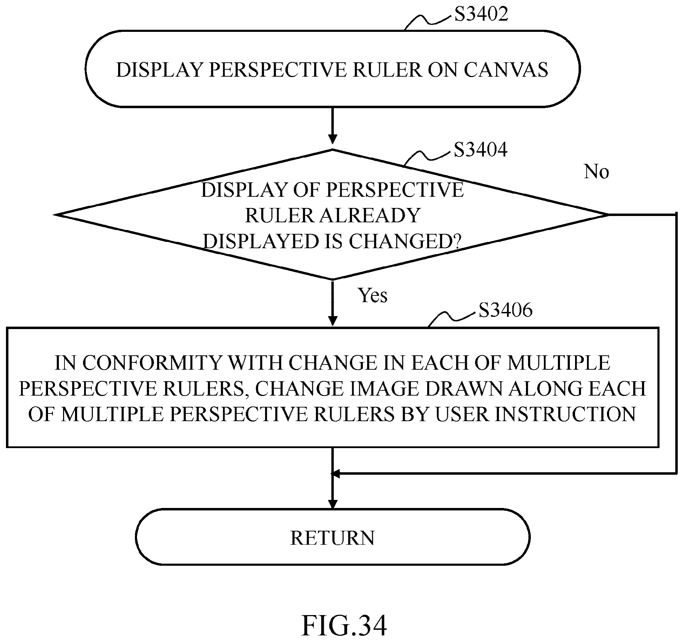

Fig. 34 is a flowchart showing an example of displaying a fisheye perspective ruler.

[Step S3402] This indicates that a flow subsequent to this Step S3402 is a subroutine of Step S2808.
[Step S3404] It is checked whether the display of a fisheye perspective ruler already displayed has been changed. If the check result is in the affirmative (YES), the processing proceeds to Step S3406. If the check result is in the negative (NO), the processing returns.
[Step S3406] An image drawn as instructed by the user along each of a plurality of fisheye perspective rulers is changed in conformity with a change in each of the plurality of fisheye perspective rulers.

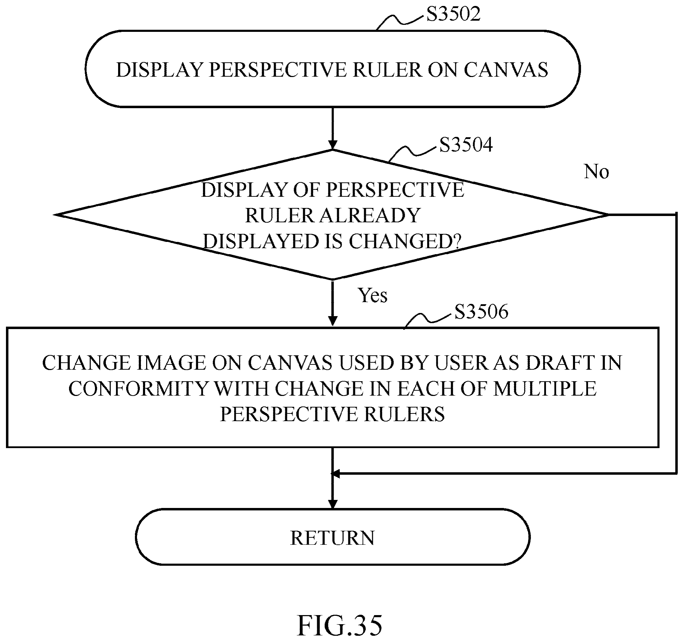

Fig. 35 is a flowchart showing another example of displaying a fisheye perspective ruler.

[Step S3502] This indicates that a flow subsequent to this Step S3502 is a subroutine of Step S2808.
[Step S3504] It is checked whether the display of a fisheye perspective ruler already displayed has been changed. If the check result is in the affirmative (YES), the processing proceeds to Step S3506. If the check result is in the negative (NO), the processing returns.
[Step S3506] An image on a canvas used by a user as a draft is changed in conformity with a change in each of the plurality of fisheye perspective rulers.

By this processing, an image used as a reference image by a user is changed in conformity with a change in a fisheye perspective ruler.

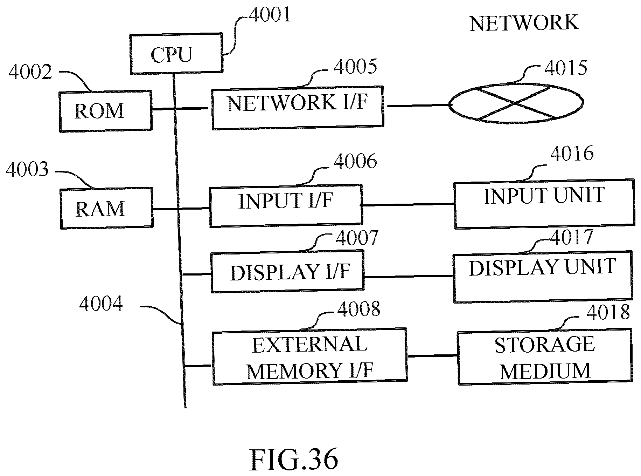

Fig. 36 is a hardware configuration diagram according to the embodiment.
The hardware configuration of the embodiment has a CPU 4001, ROM 4002 where programs and data of the present embodiment may be stored, RAM 4003, a network interface 4005, an input interface 4006, a display interface 4007, and an external memory interface 4008. These hardware components are connected to one another by a bus 4004.
The network interface 4005 is connected to a network 4015. Examples of the network 4015 include a wired LAN, a wireless LAN, the Internet, and a telecommunications network. An input unit 4016 is connected to the input interface 4006. A display unit 4017 is connected to the display interface 4007. The display unit 4017 may be implemented by a plurality of display devices. A storage medium 4018 is connected to the external memory interface 4008. The storage medium 4018 may be, e.g., RAM, ROM, CD-ROM, DVD-ROM, a hard disk, a memory card, or USB memory.

<Modification 1>

If the point W exists on the canvas, variables are transformed using r as the distance between the point O and the point W, which makes it possible to achieve an equivalent effect using the distance r, without using the angle $\theta$. Using a function g(r, k), the coordinates of the point W are transformed to the coordinates of a point B on the canvas away from the point O by a distance g(r, k). The relation between the distance r and the angle $\theta$ is expressed by the following formula:

$$r = \tan(\theta). \qquad\qquad (\text{Formula } 13)$$

Because the point W exists on the canvas, $\theta$ is in the range of $0 \le \theta < \pi/2$. The function g(r, k) equivalent to the function f($\theta$, k) is obtained by the following transformation:

$$g(r, k) = f(\tan^{-1}(r), k). \qquad\qquad (\text{Formula } 14)$$

The condition expression $0 \le f(\theta), k) \le R * \tan(\theta)$ is replaced by the condition expression $0 \le g(r, k) \le R * r$. The condition expression $0 \le \partial f(\theta, k)/\partial\theta \le R * \sec2(\theta)$ is replaced by the condition expression $0 \le \partial g(r, k)/\partial r \le R$. The condition expression $\partial f(\theta, k)/\partial\theta|_{\theta=0} = R$ is replaced by $\partial g(r, k)/\partial r|_{r=o} = R$.
Thus, the condition expressions Formulae 4, 5-1, and 5-2 are equivalent to the following formulae:

$$0 \le g(r, k) \le R * r, \qquad\qquad (\text{Formula } 15)$$

$$0 \le \partial g(r, k)/\partial r \le R, \text{ and} \qquad\qquad (\text{Formula } 16-1)$$

$$\partial g(r, k)/\partial r|_{r=0} = R. \qquad\qquad (\text{Formula } 16-2)$$

Also, the condition that $\partial f(\theta, k)/\partial\theta/(R * sec2(\theta))$ monotonically decreases with respect to $\theta$ is replaced by the condition that ag(r, k)/ar monotonically decreases with respect to r.

A modification of the embodiment shown in Fig. 6 is described. The following formula equivalent to Formula 2 is obtained by transformation of Formula 2 using Formula 14:

$$g(r, k) = R * (k + 1) * \sin(\tan^{-1}(r))/(k + \cos(\tan^{-1}(r))).$$

$$(Formula\ 17)$$

A modification of the embodiment shown in Fig. 8 is described. The following formula equivalent to Formula 8 is obtained by transformation of Formula 8 using Formula 14:

$$g(r, k) = R * m = \sin(\tan^{-1}(r))/\cos(\tan^{-1}(r) - \tan^{-1}(r) * k/2).$$ (Formula 18)

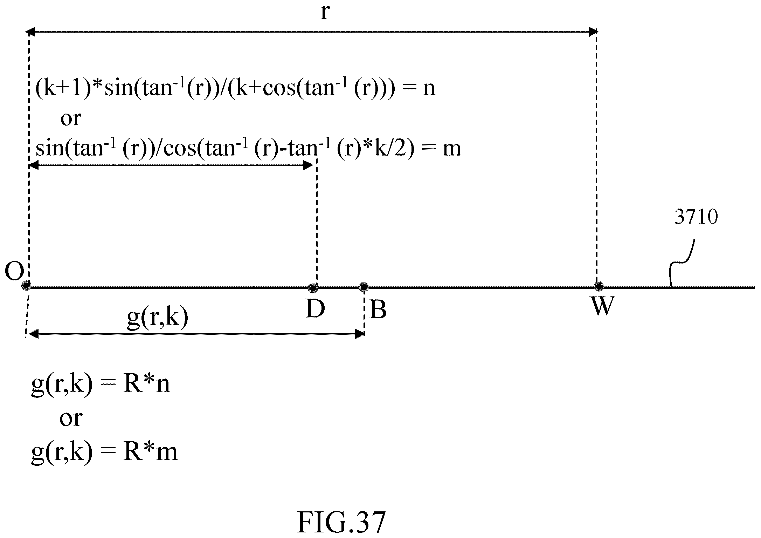

Fig. 37 is a diagram showing how the position of the point B is obtained from the position of the point W existing on a canvas 3710 without using $\theta$.

Using the function g(r, k) shown in Formula 17 or 18, the coordinates of the point W are transformed to the coordinates of the point B on the canvas 3710 away from the point O by the distance g(r, k). Thus, the relation between the distance r and the angle $\theta$ is expressed by g(r, k) = f(tan$^{-1}$(r), k).

<Modification 2>

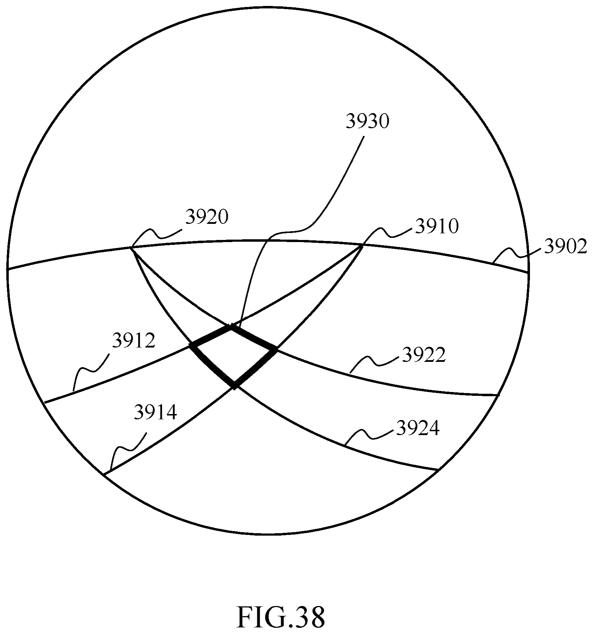

Fig. 38 is a diagram showing a user interface for easily setting a plurality of fisheye perspective rulers orthogonal to each other.

A plurality of fisheye perspective rulers passing through a common vanishing point on a canvas (e.g., a fisheye perspective ruler 3912 and a fisheye perspective ruler 3914 or a fisheye perspective ruler 3922 and a fisheye perspective ruler 3924) correspond to a group of straight lines parallel to each other in a three-dimensional space. A restriction may be addable so that a group of straight lines in the three-dimensional space corresponding to one of groups of fisheye perspective rulers on the plane of the canvas and a group of straight lines in the three-dimensional space corresponding to another one of the groups of fisheye perspective rulers will be orthogonal to each other in the three-dimensional space.

Fig. 38 shows a specific example. Considered here as an example is a case of drawing a rectangle parallel to the ground in a three-dimensional space, such as the rectangular upper surface of a desk. For example, a distorted rectangle 3930 surrounded by a thick line in Fig. 38 is the upper surface of a desk. A group of curved lines of a plurality of fisheye perspective rulers 3912 and 3914 passing through a vanishing point 3910 and a group of curved lines of a plurality of fisheye perspective rulers 3922 and 3924 passing through a vanishing point 3920 should be orthogonal to each other in the three-dimensional space.

Thus, for example, when a user determines the position of the vanishing point 3910 on the line of an eye level 3902, the position of the vanishing point 3920 can be automatically determined to satisfy the above-described condition of orthogonality in the three-dimensional space.

Further, when, for example, a user moves the position of the vanishing point 3910 on the line of the eye level, in conjunction with this, the position of the vanishing point 3920 may move automatically on the line of the eye level to satisfy the above-described condition of orthogonality in the three-dimensional space.

This makes it possible to easily set fisheye perspective rulers orthogonal to each other and facilitates the following operation: in response to a user's changing the position of a fisheye perspective ruler or its vanishing point, the other fisheye perspective ruler is set while keeping the orthogonality of the other fisheye perspective ruler.

Such a setting can be implemented when, for example, a user specifies a pair of two vanishing points having groups of fisheye perspective rulers orthogonal to each other.

The flows in the flowcharts shown as an example can be changed in order as long as it does not create contradiction. Also, a single flow shown as an example may be executed a plurality of times at different timings as long as it does not create contradiction. Also, a plurality of flows may be executed simultaneously as long as it does not create contradiction. Also, not all the steps are essential, and some of the steps may be omitted or skipped as long as it does not create contradiction.

The above points apply to constituent requirements of the method defined in the claims as well. In other words, the constituent requirements can be changed in order as long as it does not create contradiction. Also, a plurality of constituent requirements may be executed simultaneously as long as it does not create contradiction. Also, such execution of constituent requirements also falls within the technical scope defined in the claims.

Also, the steps may be executed by an operating system or hardware. Also, a program may be distributed in a state of being stored in a non-transitory medium.

A program and a method for implementing the embodiment described above may be executed by a computer including the hardware configuration shown in Fig. 36. In other words, the program for the embodiment may be implemented as a method executed by a computer.

The program may be stored in the storage medium 4018, the ROM 4002, or the RAM 4003.

Each embodiment may be implemented as a hardware apparatus installed with the program.

A "fisheye perspective ruler" described herein is synonymous with a "perspective ruler" in the scope of claims and the drawings.

The scale factor R is an example of a parameter indicating the overall scaling of a fisheye perspective ruler.

[Reference Signs List]

    4004 bus
    4005 network interface
    4006 input interface
    4007 display interface
    4008 external memory interface
    4015 network
    4016 input unit
    4017 display unit
    4018 storage medium

**Claims**

1. A perspective ruler display method for a computer to display a perspective ruler which is placed on a planar canvas existing in a virtual three-dimensional space so as to allow a line to be drawn on the canvas along the perspective ruler in response to an instruction for drawing with a fisheye lens effect from a user, the method comprising:

   with $\theta$ representing an angle LOPW formed by a point O on the canvas, a point P placed on a straight line V passing through the point O and orthogonal to a plane of the canvas, and a point W existing in the three-dimensional space and with a distance between the point O and the point P being 1, defining a function $f(\theta, k)$ for transforming coordinates of the point W into coordinates of a point B on the canvas which is away from the point O by a distance $f(\theta, k)$, the function $f(\theta, k)$ satisfying, in a range of $0 \leq \theta < \pi/2$ within a range of $\theta$ used for the transformation,

   $$0 \leq f(\theta, k) \leq R * \tan(\theta)$$

   and

   $$0 \leq \partial f(\theta, k)/\partial\theta \leq R * \sec^2(\theta),$$

   the function $f(\theta, k)$ satisfying

   $$\partial f(\theta, k)/\partial\theta|_{\theta=0} = R,$$

   and
   in a case where the range of $\theta$ includes a region with $\pi/2$ or greater, the function $f(\theta, k)$ satisfying, in a range of $\pi/2 \leq \theta \leq \pi$ within the range of $\theta$,

   $$f(\theta, k) > 0$$

   and

   $$\partial f(\theta, k)/\partial\theta \geq 0;$$

and

transforming a straight line on the canvas or a figure existing in the three-dimensional space using the function f($\theta$, k) to obtain a curved line having a same shape as a curved line found by transformation of a straight line using the function f($\theta$, k) and display a perspective ruler having the curved line thus obtained, wherein

k is a parameter indicative of distortion strength of the fisheye lens effect applied to the perspective ruler, and R is a parameter indicative of overall scaling of the perspective ruler with the point O being a center.

2. The perspective ruler display method according to claim 1, wherein
the point B exists on a straight line obtained by vertical projection of a straight line connecting the point O and the point W onto the plane of the canvas.

3. The perspective ruler display method according to claim 1, wherein

the point W is a point existing on the canvas, and
the displaying the perspective ruler displays a perspective ruler with a curved line obtained by transformation of a straight line on the canvas using the function f($\theta$, k).

4. The perspective ruler display method according to claim 3, wherein
the point B exists on a straight line connecting the point O and the point W.

5. The perspective ruler display method according to claim 1, wherein

a curved plane G axisymmetric with respect to the straight line V is formed, and
with Q representing a point where a straight line connecting the point P and the point W intersects with the curved plane G and D representing a point where a straight line connecting the point Q and a point S intersects with the canvas, the point S existing on the straight line V and located at an opposite side of the point P from the point O,
a value of the k is proportional to a distance between the point P and the point S, and
a value of the function f($\theta$, k) is proportional to a distance between the point O and the point D.

6. The perspective ruler display method according to claim 1, wherein

a curved plane G axisymmetric with respect to the straight line V is formed, and
with Q representing a point where a straight line connecting the point P and the point W intersects with the curved plane G, C representing a point placed on the straight line connecting the point P and the point W, $\alpha$ representing a value of an angle formed by the plane of the canvas and a vector OQ, and $\beta$ representing a value of an angle formed by the plane of the canvas and a vector OC,
a value of the k is proportional to a value of $\beta/\alpha$, and
a value of the function f($\theta$, k) is proportional to a distance between the point O and the point C.

7. The perspective ruler display method according to claim 1, wherein
the function f($\theta$, k) coincides with or approximates R * tan($\theta$) when the distortion strength k is a predetermined value.

8. The perspective ruler display method according to claim 1, wherein

when the distortion strength k is a predetermined value, the function f($\theta$, k) coincides with or approximates at least one of
2 * R * tan($\theta$/2) which is stereographic projection,
R * $\theta$ which is equidistant projection,
2 * R * sin($\theta$/2) which is equisolid projection, and
R * sin($\theta$) which is orthographic projection.

9. The perspective ruler display method according to claim 1, wherein
the defining the function f($\theta$, k) includes, in finding the coordinates of the point B, finding the coordinates of the point B on the canvas by applying the function f($\theta$, k) which is different for an X-coordinate of the point B and for a Y-coordinate of the point B in terms of an X-axis and a Y-axis which are coordinate axes orthogonal to each other with the point O as an origin on the plane of the canvas.

10. The perspective ruler display method according to claim 1, wherein

the displaying a perspective ruler includes setting the distortion strength k and the scale factor R while maintaining size of a function f($\pi$/2, k) at a certain value.

11. The perspective ruler display method according to claim 1, wherein
the function f($\theta$, k) is defined by a formula below:

$$f(\theta, k) = R * (k + 1) * \sin(\theta)/(k + \cos(\theta)),$$

where $0 \le k \le \infty$.

12. The perspective ruler display method according to claim 1, wherein
the function f($\theta$, k) is defined by a formula below:

$$f(\theta, k) = R * \sin(\theta)/\cos(\theta - \theta * k/2),$$

where $0 \le k \le 2$.

13. A perspective ruler display method for a computer to display a perspective ruler which is placed on a planar canvas so as to allow a line to be drawn on the canvas along the perspective ruler in response to an instruction for drawing with a fisheye lens effect from a user, the method comprising:

with r being a distance between a point O on the canvas and a point W existing on the canvas, defining a function g(r, k) for transforming coordinates of the point W into coordinates of a point B on the canvas which is away from the point O by a distance g(r, k), the function g(r, k) satisfying

$$0 \le g(r, k) \le R * r,$$

$$0 \le \partial g(r, k)/\partial r \le R,$$

and

$$\partial g(r, k)/\partial r|_{r=0} = R;$$

and
transforming a straight line on the canvas using the function g(r, k) to obtain a curved line and display a perspective ruler having the curved line thus obtained, wherein
k is a parameter indicative of distortion strength of the fisheye lens effect applied to the perspective ruler, and R is a parameter indicative of overall scaling of the perspective ruler with the point O being a center.

14. The perspective ruler display method according to claim 13, wherein
the function g(r, k) is defined by a formula below:

$$g(r, k) = R * (k + 1) * \sin(\tan^{-1}(r))/(k + \cos(\tan^{-1}(r)),$$

where $0 \le k \le \infty$.

15. The perspective ruler display method according to claim 13, wherein
the function g(r, k) is defined by a formula below:

$$g(r, k) = R * \sin(\tan^{-1}(r))/\cos(\tan^{-1}(r) - \tan^{-1}(r) * k/2),$$

where $0 \le k \le 2$.

16. A program for causing a computer to execute the perspective ruler display method according to any one of claims 1 to

15.

FIG.1A

FIG.1B

FIG.2A

FIG.2B

FIG.2C

FIG.3

FIG.4

FIG.5

FIG.6

EP 4 682 832 A1

FIG.7

EP 4 682 832 A1

FIG.8

EP 4 682 832 A1

FIG.9

$R*m = f(\theta, k)$

$k = \beta/\alpha$

FIG.10

FIG.11A

1124
1120
1170
1110
1122

FIG.11B

1124
1112
1171
1122
1170

FIG.11C

1113
1182
1112
1181
1184
1180
1112A
1130
1113A

FIG.11D

1130
1113
1112

FIG.12A

FIG.12B

1324A

1350

1322A

1324A

1320A

1370

FIG.13A

1310A

1370A

1324B

1320A

1350

1322B

1324B

1320B

FIG.13B

1310A

1370A

1370B

1360

FIG.14A

FIG.14B

FIG.14C

1522A

1550

1520A

FIG.15A

1510

1530

1540

1522B

1520B

FIG.15B

1550

1530

1510

1540

1624

1624

FIG.16A

1624

1624

1610

FIG.16B

1610

FIG.17A

FIG.17B

FIG.18A

FIG.18B

FIG.19A

FIG.19B

FIG.20A

FIG.20B

2150A

FIG.21A

2150B

FIG.21B

FIG.22A

FIG.22B

FIG.23A

FIG.23B

FIG.24A

FIG.24B

START

~S2502

DEFINE FUNCTION f($\theta$, k)

IN RANGE OF $0 \leq \theta < \pi/2$ WITHIN RANGE OF $\theta$ USED FOR TRANSFORMATION,
$0 \leq f(\theta, k) \leq R*\tan(\theta)$
$0 \leq \partial f(\theta, k)/\partial\theta \leq R*\sec^2(\theta)$

$\partial f(\theta, k)/\partial\theta|_{\theta = 0} = R$
IF RANGE OF $\theta$ INCLUDES REGION OF $\pi/2$ OR GREATER, IN RANGE OF $\pi/2 \leq \theta \leq \pi$ WITHIN THE RANGE OF $\theta$,
$f(\theta, k) > 0$
$\partial f(\theta, k)/\partial\theta \geq 0$

~S2504

TRANSFORM STRAIGHT LINE ON CANVAS OR FIGURE EXISTING IN THREE-DIMENSIONAL SPACE USING FUNCTION f($\theta$, k) TO OBTAIN CURVED LINE HAVING SAME SHAPE AS CURVED LINE OBTAINED BY TRANSFORMATION OF STRAIGHT LINE USING FUNCTION f($\theta$, k), AND DISPLAY PERSPECTIVE RULER HAVING OBTAINED CURVED LINE

END

FIG.25

S2602

DEFINE FUNCTION f(θ, k)

S2604

$f(\theta, k) = R * (k + 1) * \sin(\theta)/(k + \cos(\theta))$, where $0 \leq k \leq \infty$

RETURN

FIG.26

S2702

DEFINE FUNCTION f(θ, k)

S2704

$f(θ, k) = R^* sin(θ)/cos(θ - θ * k/2)$, where $0 \le k \le 2$

RETURN

FIG.27

START

~ S2802

BASED ON USER INSTRUCTION, IDENTIFY RULE FOR
TRANSFORMING STRAIGHT LINE ON CANVAS OR VIRTUAL
STRAIGHT LINE IN THREE-DIMENSIONAL SPACE INTO CURVED
LINE ON CANVAS CONFORMING TO FISHEYE LENS EFFECT

~ S2804

GENERATE PERSPECTIVE RULER DEFINED BY CURVED LINE
WHICH IS BASED ON RULE AND PASSES THROUGH USER-
SPECIFIED PREDETERMINED POSITION ON CANVAS

~ S2806

IDENTIFY POSITION OF VANISHING POINT ON PLANE
INCLUDING CANVAS IN MANNER RECOGNIZABLE TO USER,
VANISHING POINT BEING POINT TO WHICH CURVED LINES OF
MULTIPLE PERSPECTIVE RULERS CONVERGE

~ S2808

DISPLAY PERSPECTIVE RULERS ON CANVAS

END

FIG.28

BASED ON USER INSTRUCTION, IDENTIFY RULE FOR TRANSFORMING STRAIGHT LINE ON CANVAS OR VIRTUAL STRAIGHT LINE IN THREE-DIMENSIONAL SPACE INTO CURVED LINE ON CANVAS CONFORMING TO FISHEYE LENS EFFECT — S2902

USER INSTRUCTION IS TO CHANGE DISTORTION STRENGTH? — S2904

No

Yes

CHANGE RULE IN RESPONSE TO CHANGE IN DISTORTION STRENGTH — S2906

RETURN

## FIG.29A

GENERATE PERSPECTIVE RULER DEFINED BY CURVED LINE WHICH IS BASED ON RULE AND PASSES THROUGH USER-SPECIFIED PREDETERMINED POSITION ON CANVAS — S2910

CHANGE PERSPECTIVE RULER GENERATED BEFORE RULE IS CHANGED, INTO PERSPECTIVE RULER DEFINED BY CURVED LINE WHICH IS BASED ON CHANGED RULE AND PASSES THROUGH PREDETERMINED POSITION SPECIFIED BY USER BEFORE RULE IS CHANGED — S2912

RETURN

## FIG.29B

S3002

BASED ON USER INSTRUCTION, IDENTIFY
RULE FOR TRANSFORMING STRAIGHT
LINE ON CANVAS OR VIRTUAL STRAIGHT
LINE IN THREE-DIMENSIONAL SPACE INTO
CURVED LINE ON CANVAS CONFORMING
TO FISHEYE LENS EFFECT

S3004

IDENTIFY RULE BASED ON AT LEAST ONE OF USER-SPECIFIED
STRENGTH OF DISTORTION OF FISHEYE LENS EFFECT, SCALE
FACTOR, AND POSITION OF CENTER AXIS OF VIRTUAL LENS
FOR FISHEYE LENS EFFECT

RETURN

FIG.30

S3102

BASED ON USER INSTRUCTION, IDENTIFY RULE FOR TRANSFORMING STRAIGHT LINE ON CANVAS OR VIRTUAL STRAIGHT LINE IN THREE-DIMENSIONAL SPACE INTO CURVED LINE ON CANVAS CONFORMING TO FISHEYE LENS EFFECT

S3104

IDENTIFY CURVED LINES OF TWO RULERS BY DRAWING OF TWO CURVED LINES ON CANVAS BASED ON USER INSTRUCTION

S3106

SET POINT OF INTERSECTION BETWEEN TWO CURVED LINES AS VANISHING POINT

S3108

IDENTIFY AT LEAST STRENGTH OF DISTORTION OF FISHEYE LENS EFFECT BASED ON DEGREE OF CURVATURE OF AT LEAST ONE OF TWO CURVED LINES

RETURN

FIG.31

S3202

GENERATE PERSPECTIVE RULER DEFINED BY CURVED LINE WHICH IS BASED ON RULE AND PASSES THROUGH USER-SPECIFIED PREDETERMINED POSITION ON CANVAS

S3204

USER INSTRUCTION IS TO CHANGE SLOPE OF PREDETERMINED PERSPECTIVE RULER?

No

Yes

S3206

CHANGE POSITION OF VANISHING POINT OF PREDETERMINED PERSPECTIVE RULER

S3208 No

USER INSTRUCTION IS TO CHANGE PREDETERMINED POSITION?

Yes

S3210

WITH POSITION OF VANISHING POINT UNCHANGED, CHANGE CURVED LINE OF PREDETERMINED PERSPECTIVE RULER PASSING THROUGH CHANGED PREDETERMINED POSITION

S3212

IT IS CASE WHERE POSITION OF PREDETERMINED VANISHING POINT IS FIXED AND PREDETERMINED POSITION ON PERSPECTIVE RULER CONVERGING TO PREDETERMINED VANISHING POINT IS NOT TO BE CHANGED?

No

Yes

S3214

MAKE PERSPECTIVE RULER UNCHANGEABLE

RETURN

FIG.32

S3302

GENERATE PERSPECTIVE RULER DEFINED
BY CURVED LINE WHICH IS BASED ON RULE
AND PASSES THROUGH USER-SPECIFIED
PREDETERMINED POSITION ON CANVAS

S3304

DISTORTION STRENGTH
IS CHANGED BY USER?

No

Yes

S3306

CHANGE CURVED LINE OF PERSPECTIVE RULER WITHOUT
MOVING PREDETERMINED POSITION

S3308

POSITION OF VANISHING
POINT IS CHANGED BY
USER INSTRUCTION?

No

Yes

S3310

CHANGE CURVED LINE OF PERSPECTIVE RULER

RETURN

FIG.33

S3402

DISPLAY PERSPECTIVE RULER ON CANVAS

S3404

DISPLAY OF PERSPECTIVE
RULER ALREADY
DISPLAYED IS CHANGED?

No

Yes

S3406

IN CONFORMITY WITH CHANGE IN EACH OF MULTIPLE
PERSPECTIVE RULERS, CHANGE IMAGE DRAWN ALONG EACH
OF MULTIPLE PERSPECTIVE RULERS BY USER INSTRUCTION

RETURN

FIG.34

S3502

DISPLAY PERSPECTIVE RULER ON CANVAS

S3504

DISPLAY OF PERSPECTIVE
RULER ALREADY
DISPLAYED IS CHANGED?

No

Yes

S3506

CHANGE IMAGE ON CANVAS USED BY USER AS DRAFT IN
CONFORMITY WITH CHANGE IN EACH OF MULTIPLE
PERSPECTIVE RULERS

RETURN

FIG.35

FIG.36

$(k+1)*\sin(\tan^{-1}(r))/(k+\cos(\tan^{-1}(r))) = n$

or

$\sin(\tan^{-1}(r))/\cos(\tan^{-1}(r)-\tan^{-1}(r)*k/2) = m$

r

3710

O

D B

W

g(r,k)

g(r,k) = R*n

or

g(r,k) = R*m

FIG.37

FIG.38

## INTERNATIONAL SEARCH REPORT

International application No.

**PCT/JP2023/047352**

### A. CLASSIFICATION OF SUBJECT MATTER

*G06T 11/80*(2006.01)i
FI:  G06T11/80 E

According to International Patent Classification (IPC) or to both national classification and IPC

### B. FIELDS SEARCHED

Minimum documentation searched (classification system followed by classification symbols)

G06T11/60-11/80

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2013-257844 A (CASIO COMPUTER CO., LTD.) 26 December 2013 (2013-12-26) paragraphs [0156]-[0164], fig. 14-15 | 1-16 |
| A | JP 2012-103805 A (CANON KABUSHIKI KAISHA) 31 May 2012 (2012-05-31) paragraphs [0016]-[0017] | 1-16 |
| A | 平井太朗, あなたもイラストが描ける ＩＬＬＵＳＴ ＳＴＵＤＩＯ 公式ガイド, 第1版, 株式会社アスキー・メディアワークス, 2009, pp. 86-89, ISBN978-4-04-867997-8, non-official translation (HIRAI, Taro. Official guideline for ILLUST STUDIO where you can draw illustrations too. 1st edition. ASCII MEDIA WORKS KK.) in particular, pp. 86, 88 | 1-16 |

☐ Further documents are listed in the continuation of Box C.　　☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **13 February 2024** | **20 February 2024** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

## INTERNATIONAL SEARCH REPORT
### Information on patent family members

International application No.

**PCT/JP2023/047352**

| Patent document cited in search report | | | Publication date (day/month/year) | Patent family member(s) | Publication date (day/month/year) |
|---|---|---|---|---|---|
| JP | 2013-257844 | A | 26 December 2013 | (Family: none) | |
| JP | 2012-103805 | A | 31 May 2012 | (Family: none) | |

Form PCT/ISA/210 (patent family annex) (July 2022)